# EUROPÄISCHE PATENTSCHRIFT

(11) **EP 0 796 595 B1**
(45) Veröffentlichungstag und Bekanntmachung des Hinweises auf die Patenterteilung: **15.06.2005**
(21) Anmeldenummer: 97104706.3
(22) Anmeldetag: 19.03.1997
(51) Int. Cl.: A61C 11/00

(54) **Zahnärztlicher Artikulator zur Ausführung von Distraktionsbewegungen**
Dental articulator for performing distraction motions
Articulateur dentaire pour réaliser des mouvements de distraction

(30) Priorität: 19.03.1996 DE 19610836
(43) Veröffentlichungstag der Anmeldung: 24.09.1997
(73) Patentinhaber: Kaltenbach & Voigt GmbH & Co. KG, 88400 Biberach/Riss (DE)
(72) Erfinder: Lang, Hans Walter, 88299 Leutkirch (DE); Straka, Alfred, 88316 Isny (DE)
(74) Vertreter: Schmidt-Evers, Jürgen, Dipl.-Ing.

(56) Entgegenhaltungen:
- EP-A- 0 470 537
- DE-A- 3 215 558
- DE-A- 4 211 020
- US-A- 3 590 487
- US-A- 3 694 919
- US-A- 3 905 112
- US-A- 4 303 390

## Beschreibung

Ein zahnärztlicher Artikulator ist ein Bewegungssimulator, an dem Unterkieferbewegungen simuliert werden können, was für die Herstellung von Zahnersatz, z.B. Prothesen oder Brücken, erforderlich ist.

Die im vorliegenden Zusammenhang wesentlichen Hauptteile eines Artikulators sind das Unterteil und das Oberteil, die das Unterkieferzahnmodell und das Oberkieferzahnmodell tragen und in einem Dreh-Schiebegelenk miteinander verbunden sind, dessen Drehachse in der Schlußbißstellung (sogenannte O-Stellung) rechtwinklig zur vertikalen Mittelebene des Artikulators verläuft. Um diese Drehachse der zu beiden Seiten im Artikulator vorhandenen Dreh-Schiebegelenke, ist das so gebildete künstliche Gebiß durch Schwenken des Oberteils in der Vertikalmittelebene zu öffnen und zu schließen. Außerdem können Protrusionsbewegungen, Laterotrusionsbewegungen und Mediotrusionsbewegungen ausgeführt werden, wie es das menschliche Kiefergelenk ermöglicht.

Man unterscheidet bekannte Artikulatoren zum einen zwischen solchen, die hinsichtlich ihrer prinzipiellen Bewegung unterschiedlich sind. Es gibt Artikulatoren, bei denen die Gelenkkugel am Unterteil und die zugehörige Schiebegelenkführung am Oberteil angeordnet ist. Einen Artikulator dieses Typs nennt man Arcon-Artikulator. Im Gegensatz dazu ist ein Non-Arcon-Artikulator ein solcher, bei dem die Gelenkkugeln am Oberteil und die Schiebe-Gelenkführung am Unterteil angeordnet ist.

Bei den meisten Artikulatoren wird die Unterkieferbewegungssimulation durch Bewegungen des Oberteils und somit des Oberkiefers simuliert.

Zum anderen gibt es sog. Mittelwerts-Artikulatoren und einstellbare Artikulatoren. Bei einem weniger aufwendig gestalteten Mittelwert-Artikulator sind die Führungsbahnen der Dreh-Schiebegelenke nicht einstellbar, sondern nach Mittelwerten unveränderlich ausgebildet. Bei einem einstellbaren Artikulator ist z.B. die Sagittal-Führung, die Bennett-Führung und die Seitenführung einstellbar. Welcher dieser beiden zuletzt genannten Typen von Artikulatoren zum Einsatz kommt, bestimmt sich nach dem Umfang und dem Schwierigkeitsgrad der prothetischen Aufgabe, die zu lösen ist. Die Wahl des Artikulatortyps kann sich auch nach den Angaben richten, die der Zahnarzt dem Zahntechniker für die prothetische Aufgabe vorgibt.

Es ist bekannt, an einem Artikulator Gelenkkorrekturen durchzuführen, um bestimmte Kiefergelenk-Veränderungen und daraus resultierende Abweichungen in der Vertikalen von normalen Gelenkstellungen bei Patienten zu berücksichtigen. Bei solchen mangelhaften Kiefergelenk-Veränderungen kann es sich z.B. um Stellungsfehler oder auch Verschleißfehler im Kiefergelenk handeln, und es ist bei der Bewegungssimulation des Unterkiefers im Artikulator eine therapeutische Position der Gelenkkugel im Ge!enkgehäuse zu berücksichtigen. Bei bekannten Artikulatoren werden solche therapeutischen Positionen dadurch herbeigeführt, daß Distanzscheiben zwischen der sagittalen Führungsfläche und der Gelenkkugel eingesteckt werden, wobei Distanzscheiben unterschiedlicher Dicke bereitzustellen sind, mit denen sich die unterschiedlichen therapeutischen Positionen berücksichtigen lassen.

Das Arbeiten mit Distanzscheiben ist unbefriedigend, handhabungsunfreundlich und zeitaufwendig, da es sich bei den Distanzscheiben um kleine Bauteile handelt, die an unübersichtlichen Stellen in den Schwenk-Schiebegelenken zu positionieren sind, wobei die Gefahr des Verschiebens oder Herausfallens der eingesteckten Distanzscheiben besteht, so daß der Zahnarzt oder Zahntechniker eine erhöhte Aufmerksamkeit auf die Anordnung der Distanzscheiben richten muß und somit weniger Aufmerksamkeit auf andere wichtige Funktionen während der Benutzung des Artikulators richten kann.

Der Erfindung liegt die Erkenntnis zugrunde, einen zahnärztlichen Artikulator, der vorliegenden Art für Gelenkkorrekturen zu benutzen und so auszugestalten, daß Gelenkkorrekturen einfacher und mit geringerem Aufwand durchgeführt werden können.

Diese Erkenntnis bzw. Aufgabe wird durch die Merkmale des Anspruchs 1 realisiert.

Der Erfindung liegt die Erkenntnis zugrunde, daß ein zahnärztlicher Artikulator für Gelenkkorrekturen benutzt werden kann, insbesondere dann, wenn er solche Schwenk-Schiebegelenke aufweist, deren Gelenkgehäuse sich um eine horizontale und quer zur vertikalen Längsmittelebene des Artikulators verlaufenden Achse, insbesondere der Schwenkachse der Schwenk-Schiebegelenke, um etwa 90° schwenken und in dieser Schwenkposition feststellen lassen. Er eignet sich dazu, entweder mit einer Distraktions-Führung und -Einstellvorrichtung oder mit der vorhandenen Protrusions-Führung und Protrusionsbewegungs-Einstellvorrichtung in um etwa 90° schwenkbaren und feststellbaren Schwenk-Schiebegelenken, Distraktionsbewegungen in den Schwenk-Schiebegelenken auszuführen und einzustellen, wodurch sich therapeutische Positionen der Schwenk-Schiebegelenke ohne zusätzlich vorhandene und zu handhabende Bauteile wie Distanzscheiben einstellen lassen. Hierdurch ist eine einfache, präzise und ggf. auch stufenlose Einstellung von Distraktionspositionen möglich, wobei die Bedienungsperson diese Einstellungen mit verhältnismäßig geringer Aufmerksamkeit ausführen kann und ihre übrige Aufmerksamkeit anderen wichtigen Funktionen des Artikulators oder den vorhandenen Zahnteilen widmen kann. Dabei kann der Artikulator hinsichtlich seiner baulichen Zusammensetzung unverändert bleiben. Er braucht lediglich hinsichtlich der Stellung der Gelenkgehäuse der Schwenk-Schiebegelenke verstellt zu werden, wobei die Distraktionseinstellungen mit der vorhandenen Protrusionsbewegungs-Einstellvorrichtung ausgeführt und eingestellt werden können.

Im Rahmen der Erfindung werden die angestrebten Vorteile bereits dann erreicht, wenn beiden Schwenkgelenken eine gemeinsame Protrusions- und/oder Distraktions-Führung oder Protrusionsbewegungs- und/oder Distraktions-Einstellvorrichtung zugeordnet ist. Eine solche Ausgestaltung eignet sich dazu, in beiden Kiefergelenken gleichzeitig etwa gleiche therapeutische Positionen einzustellen. Für unterschiedliche therapeutische Positionen ist es erforderlich, jedem Schwenk-Schiebegelenk eine Protrusions-Führung und/oder eine Protrusionsbewegungs-Einstellvorrichtung zuzuordnen, so daß die Schwenk-Schiebegelenke in individuellen therapeutischen Positionen eingestellt werden können.

Eine weitere Anwendungsmöglichkeit des erfindungsgemäßen Protrusions- und/oder Distraktionsartikulatorarms ist ein definiertes Einschleifen von Zahnmodellen, insbesondere Totalprothesen. Mit Hilfe der erfindungsgemäßen Maßnahmen können beide Zahnmodelle bzw. Prothesen gegeneinander verschoben werden. Bei diesem Verschieben werden alle Regionen, die zu hoch sind, sichtbar und können somit abgearbeitet, insbesondere abgeschliffen werden. Durch diese Maßnahme wird erreicht, daß sich nach Möglichkeit immer alle Zähne berühren. Ein Lösen durch von Adhäsion haftenden Prothesen wird dadurch vermieden.

In den Unteransprüchen sind Merkmale enthalten, die die Protrusionsbewegungs-Einstellung weiter vereinfachen und präzisieren, wobei einfache und kostengünstig herstellbare Ausgestaltungen vorgeschlagen werden, die sich insbesondere vorteilhaft in einen Artikulator, insbesondere in den bekannten Artikulator, in einfacher Weise integrieren lassen, vorzugsweise als Austauschteile, so daß Teile einer speziellen Distraktionsbewegungs-Einstellvorrichtung nachgerüstet werden können.

Nachfolgend wurden die Erfindung und weitere durch sie erzielbare Vorteile anhand von vorteilhaften Ausgestaltungen und Zeichnungen näher erläutert.
- Fig. 1: einen erfindungsgemäßen Artikulator in perspektivischer Front/Seitenansicht;
- Fig. 2: den Artikulator in der Seitenansicht von links;
- Fig. 3: ein Oberteil des Artikulators in der Seitenansicht von links, teilweise geschnitten;
- Fig. 4: das Oberteil in der Rückansicht;
- Fig. 5: das Oberteil in der Unteransicht;
- Fig. 6: die in Fig. 3 mit A gekennzeichnete Einzelheit in vergrößerter Darstellung, teilweise geschnitten;
- Fig. 6A bis 6C: die Einzelheit A in unterschiedlichen Funktionsstellungen eines Gelenk-Schloßbügels des Artikulators;
- Fig. 7: ein an den Schloßbügel montierbares Federelement in der Seitenansicht von links und in vergrößerter Darstellung;
- Fig. 8: das Federelement in der Draufsicht;
- Fig. 9: einen horizontalen Schnitt durch die Gelenke des Artikulators mit Blickrichtung von oben;

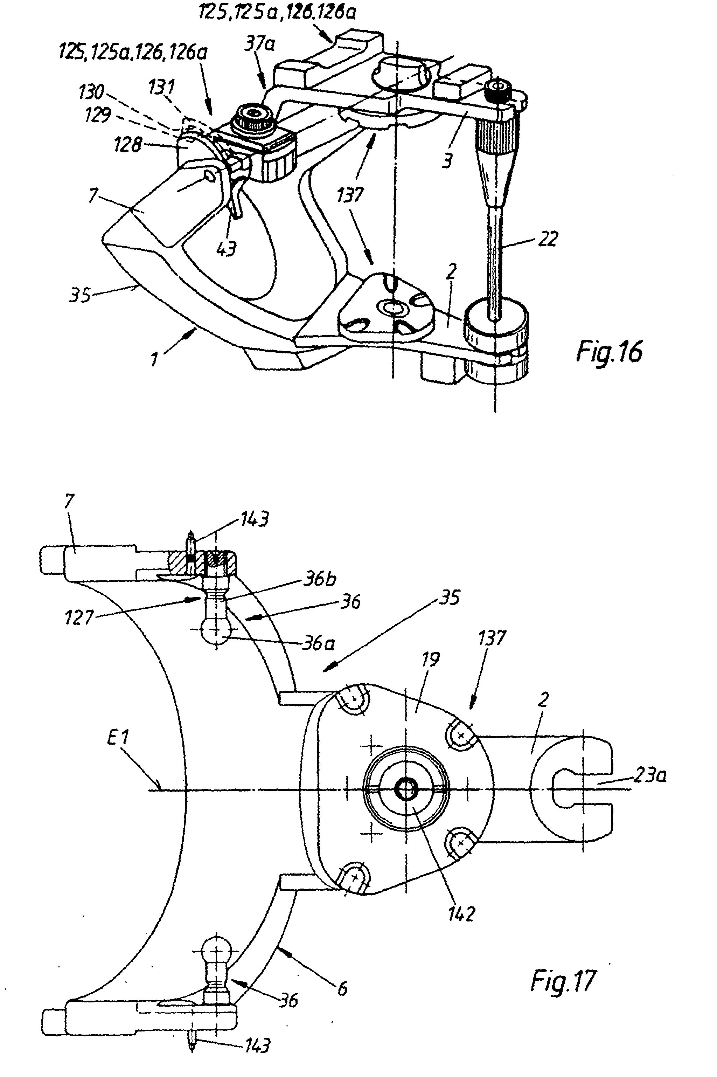

- Fig. 10: den Teilschnitt X-X in Fig. 6;
- Fig. 11: den Teilschnitt XI-XI in Fig. 4 in vergrößerter Darstellung;
- Fig. 12: ein abgewandeltes Seitenführungsteil in der Vorderansicht;
- Fig. 13: das Seitenführungsteil in der Seitenansicht von links;
- Fig. 14A bis 14E: Seitenführungsflächen des Seitenführungsteils nach Fig. 12;
- Fig. 15: ein Seitenführungsteil in weiterer abgewandelter Ausgestaltung in der Seitenansicht
- Fig. 16: den linken Gelenkbereich eines erfindungsgemäßen Artikulators in abgewandelter Ausgestaltung in perspektivischer Darstellung;
- Fig. 17: das Unterteil des Artikulators in der Draufsicht;
- Fig. 18: ein Protrusiovs-Führungsteil in der Vorderansicht;
- Fig. 19: das Führungsteil in der Seitenansicht von rechts;
- Fig. 20: einen Teil des Artikulators in abgewandelter Ausgestaltung in einer der Fig. 3 entsprechenden Seitenansicht mit einem zur Ausführung von Distraktionsbewegungen eingestellten Schwenk-Schiebegelenk;
- Fig. 21: ein Oberteil des Artikulators in abgewandelter Ausgestaltung in der Rückansicht;
- Fig. 22: eine Protrusions-Distraktions-Einheit als Austauschteil für den Artikulator in der Seitenansicht;

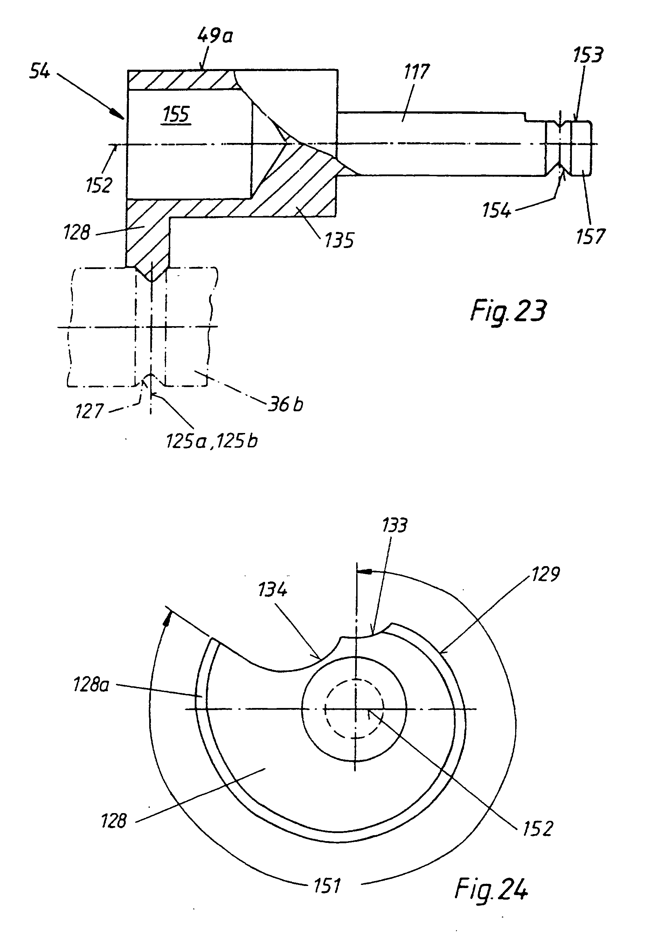

- Fig. 23: ein Protrusions/Distraktions-Führungsteil in der Seitenansicht;
- Fig. 24: das Führungsteil nach Fig. 23 in der Stirnansicht von links;

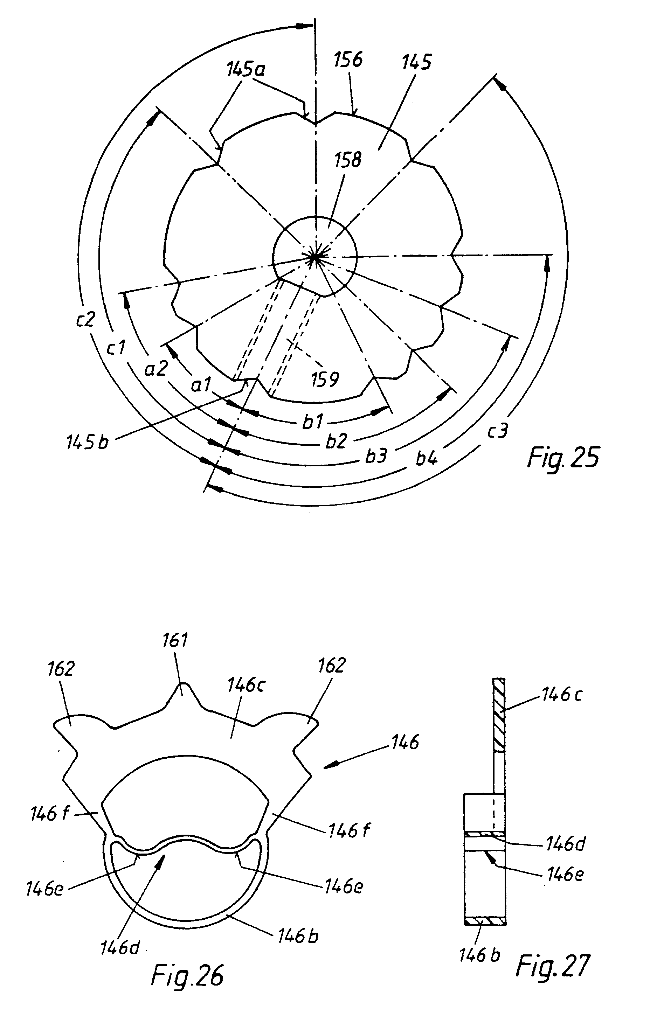

- Fig. 25: eine Antriebsscheibe der Protrusions/Distraktions-Einheit in axialer Ansicht;
- Fig. 26: ein Rastfederteil in der Seitenansicht;
- Fig. 27: das Rastfederteil im axialen Schnitt;
- Fig. 28: den Teilschnitt XXVIII-XXVIII in Fig. 21 bei in den Artikulator montierter Protrusions/Distraktions-Einheit.

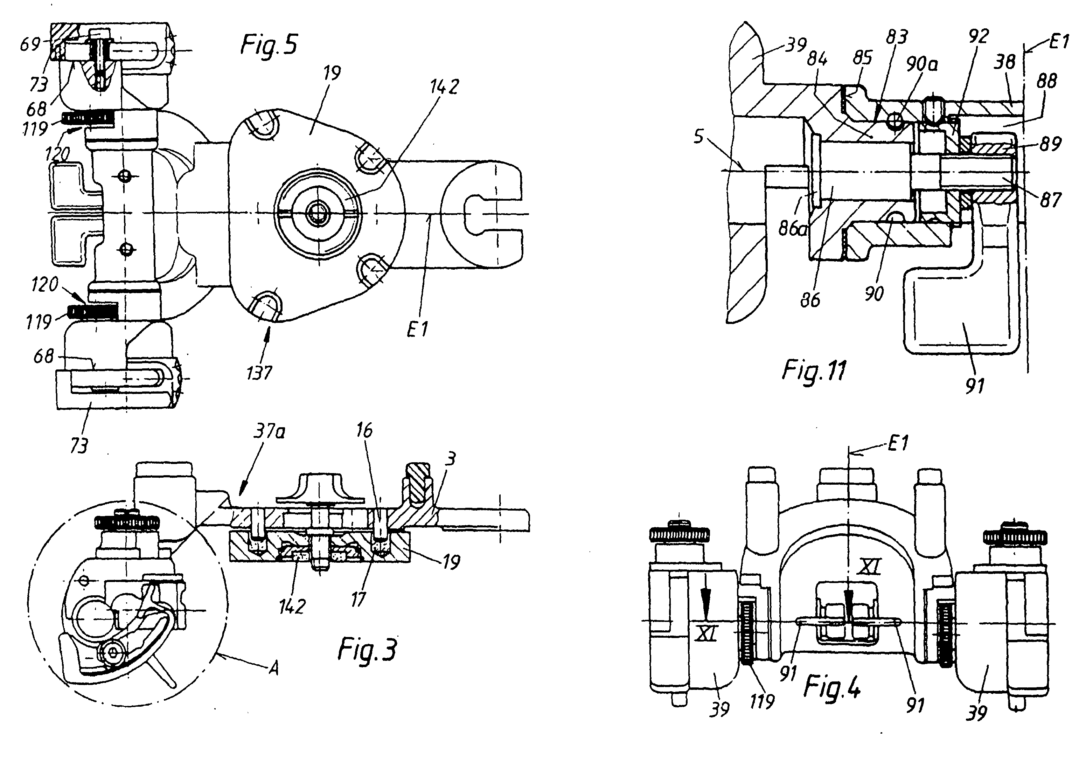

Von dem Artikulator 1 werden im folgenden nur die für den vorliegenden Zusammenhang funktionswesentlichen Hauptteile beschrieben. Diese sind ein unterer Artikulatorarm 2 und ein oberer Artikulatorarm 3, von denen letzerer um ein sich zu eine von vorne nach hinten erstreckenden vertikalen Längsmittelebene E1 des Artikulators 1 rechtwinklig erstreckende Schwenkachse 5 schwenkbar an einem U-förmigen Gestell oder Rahmen 6 mit zwei seitlichen sich aufwärts erstreckenden Rahmenschenkeln 7 gelagert ist. Die rahmenseitigen Schwenklagerteile 9 sind an den oberen Enden der Rahmenschenkel 7 angeordnet. Es handelt sich vorzugsweise um einen sog. Arcon-Artikulator mit Dreh- bzw. Schwenkschiebegelenken 11, von denen sich die Schiebeführung 12 am oberen Artikulatorarm 3 befindet. Im hinteren bzw. mittleren Bereich der Artikulatorarme 2,3 sind an deren einander zugewandten Seiten jeweils ein Anordnungsplatz 13 für zugehörige Zahnmodelle oder Zahnmodellsockelteile vorgesehen, die jeweils durch eine den Artikulatorarm 2,3 in einem Durchgangsloch durchfassende Schraube 15 und von den Artikulatorarmen 2,3 vorstehenden Paßstiften 16 positionierbar und befestigbar sind. In den Figuren sind zwei Primärsockel 19 für ein Unterkiefer- und ein Oberkieferzahn modell UK, OK dargestellt. Am vorderen Ende des einen Artikulatorarmes 2,3 hier des unteren Artikulatorarms 2, ist ein Inzisaltisch 21 befestigt, auf den ein sich aufrecht erstreckender, teleskopierbarer Stützstift 22 mit seinem freien Ende lösbar abgestützt ist, der am Ende des anderen Artikutatorarms hier des oberen Artikulatorarms 3 lösbar befestigt ist. Vorzugsweise sind die Befestigungs- bzw. Aufnahmeelemente für den Inzisaltisch und den Stützstift 22 gleich oder zueinander passend, so daß der Inzisaltisch 21 und der Stützstift 22 jeweils in einander entgegengesetzten Positionen wahlweise am oberen oder am unteren Artikulatorarm 2,3 befestigbar sind. Zur Halterung dient jeweils ein vorzugsweise sich in der Längsmittelebene erstreckender, den zugehörigen Artikulatorarm 2,3 vertikal durchsetzender und an seinem freien Ende ausmündender Paßschlitz 23a, 23b. In diese einander gleichen Paßschlitze ist wahlweise der Inzisaltisch 21 oder Stützstift 22 mit einer entsprechend passend geformten Taillierung bis zu miteinander übereinstimmenden Schlitzenden, die die Einschiebebewegung begrenzende Anschläge bilden, montierbar und durch ein Schraubteil 31 am zugehörigen Arukulatorarm 2,3 verschraubbar. Die beiden Primärsockel 19 weisen Paßlöcher 17 für die Paßstifte 16 auf (Fig. 3).

Der Artikulator 1 besteht aus einem Unterteil 35, das den unteren Artikulatorarm 2 den Rahmen 6 und von den Innenseiten der Rahmenschenkel 7 koaxial nach innen vorspringende Gelenkköpfe 36 aufweist, und einem einstellbaren Oberteil 37a, das den oberen Artikulatorarm 3, ein Gelenk-Nabenteil 38 und. zwei daran seitlich befestigte Gelenkgehäuse 39 aufweist, in denen die Gelenkköpfe 36 in jeweils einem Schwenk-Schiebegelenk 11 gelagert sind. Das Oberteil 37a ist mittels den Gelenkgehäusen 39 zugeordneten zwei Zentrikschlössern 42 lösbar in den Schwenk-Schiebegelenken 11 gehalten. Jedes Zentrikschloß 42 weist einen C-förmigen Schloßbügel 43 auf, der in seiner eingeschwenkten Schließstellung den zugehörigen Gelenkkopf 36 untergreift und hierdurch in der vorhandenen seitlich und nach unten offenen Gelenkausnehmung 40 sichert.

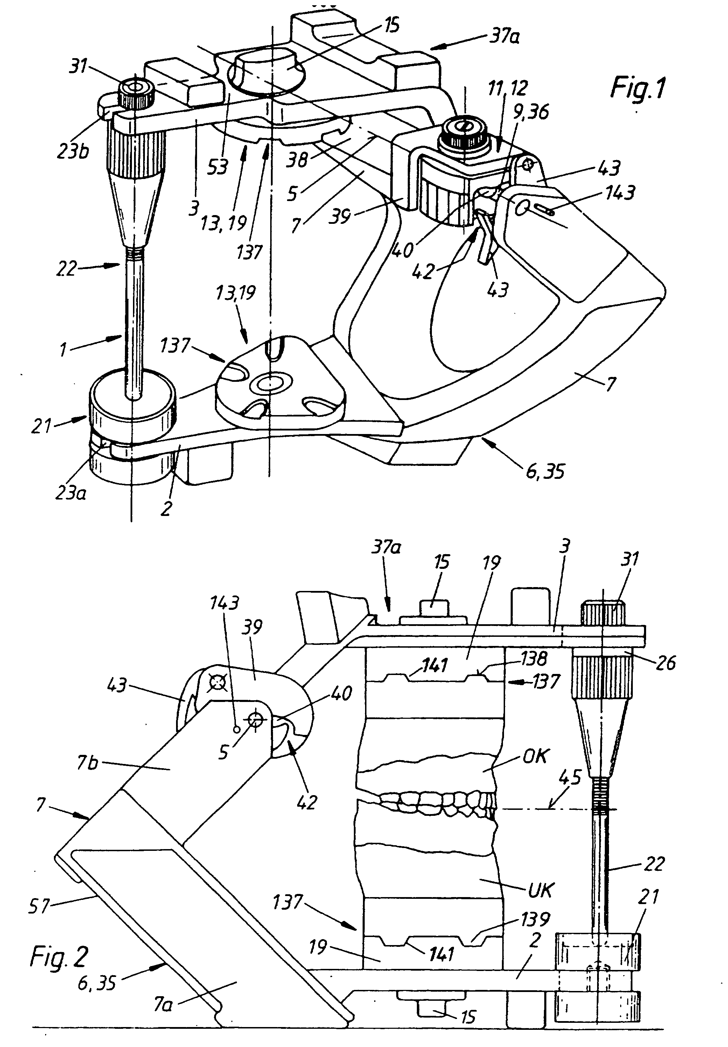

Die Artikulatorarme sind bei vorliegenden Ausführungsbeispiel vorzugsweise so angeordnet, daß nicht nur der untere Artikulalorarm 2, sondern vorzugsweise auch der obere Artikulatorarm 3 im wesentlichen horizontal angeordnet sind, wenn der Unterkiefer UK und der Oberkiefer OK in der Schlußbißstellung aufeinanderliegen (Fig. 2). Dabei erstreckt sich auch die Okklusionsebene 45 im wesentlichen horizontal und somit parallel zur den Artikulator 1 tragenden horizontalen Tisch- bzw Arbeitsfläche.

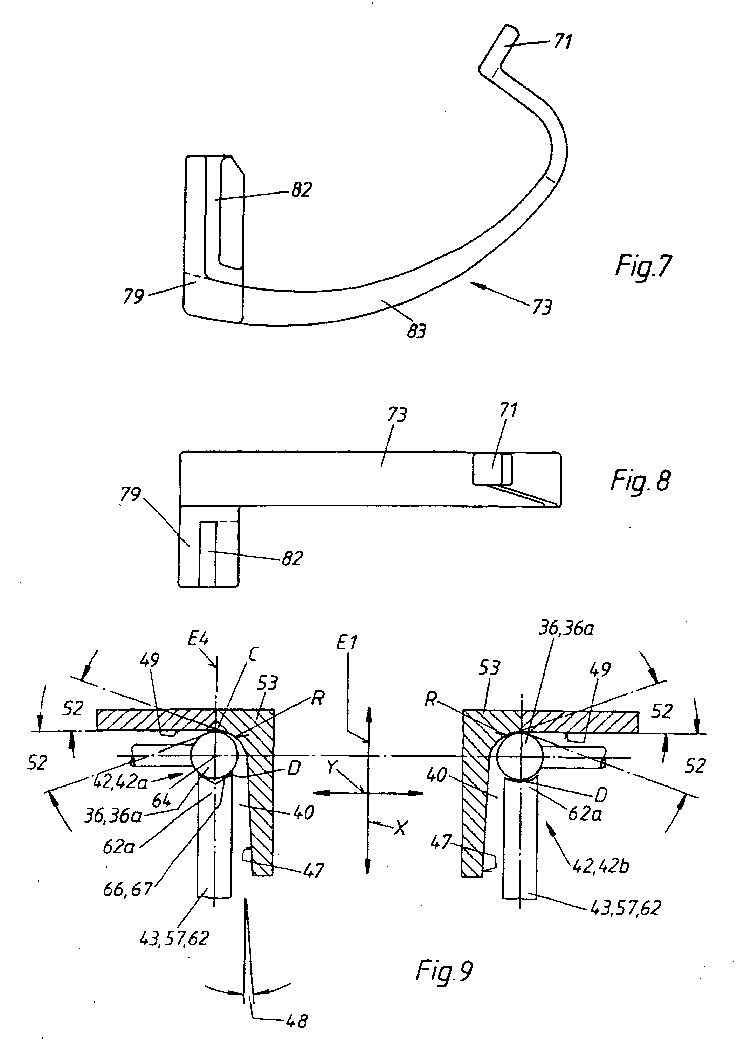

Aus dieser Schlußbißstellung heraus können im Artikulator 1 Unterkieferbewegungen simuliert werden, die den anatomischen Gegebenheiten des menschlichen Körpers entsprechen. Jedoch läßt sich hierzu beim vorliegenden Ausführungsbeispiel nicht der Unterkiefer UK bzw. das Unterteil 35, sondern das Oberteil 37 mit dem Oberkiefer OK relativ zum Unterteil 35 bewegen (Arcon-Artikulator). Hierbei handelt es sich im wesentlichen um Öffnungs- und Schließbewegungen, Protrusionsbewegungen, Laterotrusionsbewegungen und Mediotrusionsbewegungen. Um dies zu ermöglichen, weisen die seitlich und nach unten offenen, bezüglich der vertikalen Längsmittelebene E1 des Artikulators 1 spiegelbildlich angeordneten Gelenke 11 bzw. Gelenkausnehmungen 40 jeweils eine obere sagittale Führungsfläche 46, die nach vorne gekrümmt geneigt verläuft, eine Bennett-Führungsfläche 47, die mit der vertikalen Längsmittelebene E1 des Artikulators 1 einen nach vorne offenen spitzen Bennett-Winkel 48 einschließt, und eine aufrecht angeordnete, sich quer zur vertikalen Mittelebene E1 erstreckende Seitenführungsfläche 49, die beim Ausführungsbeispiel gemäß Figuren 3 bis 9 parallel zur Schwenkachse 5 in der Schlußbißstellung, nämlich die O-Stellung,verläuft, jedoch auch einen sog. Shiftwinkel 52 (in Figur 9 angedeutet) mit der horizontalen Schwenkachse 5 einschließen kann. Die Gelenkausnehmungen 40 sind somit nach hinten durch die jeweils zugehörige Seitenführungsfläche 49, nach innen durch die Bennett-Führungsfläche 47 und nach oben durch die sagittale Führungsfläche 46 begrenzt. Letztere verläuft nach vorne geneigt und dabei zunächst konvex und dann konkav gekrümmt, so daß ihr vorderer Endbereich bogenförmig nach unten verläuft.

Jede Gelenkausnehmung 40 ist in einem zugehörigen Lagerteil 53 angeordnet, das in vorzugsweise vier Freiheitsgraden verstellbar und in der jeweiligen Einstellung feststellbar im zugehörigen Gelenkgehäuse 39 gelagert ist, was noch beschrieben werden wird.

Bei der vorliegenden Ausgestaltung ist die Seitenführungsfläche 49 nicht Teil des zugehörigen Lagerteils 53, sondern ein besonderes ebenfalls am zugehörigen Gelenkgehäuse 39 gelagertes Bauteil, das bei der vorliegenden Ausgestaltung durch einen Zylinder 54 gebildet ist, der zur Schwenkachse 5, die in der O-Stellung die Mittelachse der Gelenkköpfe 36 ist, soweit nach hinten und unten parallel versetzt gelagert ist, daß seine Mantelfläche 55 die Seitenführungsfläche 49 bildet. Die Anordnung des Zylinders 54 ist so getroffen, daß seine Mantelfläche 55 mit dem hinteren Endbereich der sagittalen Führungsfläche 46 die jeweils durch einen Kugelkopf 36a gebildeten Gelenkzapfen 36 in der O-Stellung rückseitig begrenzt. In dieser hinteren Lagersiellung, die der Schlußbißstellung entspricht, liegt der Berührungspunkt B zwischen dem Kugelkopf 36a und der sagittalen Führungsfläche 46 in einer die Schwenkachse 5 enthaltenden vertikalen Querebene E2, während der Berührungspunkt C zwischen dem Kugelkopf 36a und dem Seitenführungsteil 54 in einer der Schwenkachse 5 enthaltenden Ebene E3, die etwa horizontal angeordnet sein kann, vorzugsweise nach hinten um einen Winkel von etwa 30° geneigt ist, liegt. Rückseitig von den Berührungspunkten B und C kann die zugehörige Gelenkausnehmung 40 offen sein oder einen Freiraum bzw. Spalt 56 aufweisen der vom Berührungspunkt B aus mondsichelförmig verlaufen kann und eine Retrusionsbewegung des Oberteiles 37a von z.B. bis etwa 1,5 mm ermöglicht, wenn das Seitenfuhrungsteil 54 demontiert wird, was noch beschrieben wird.

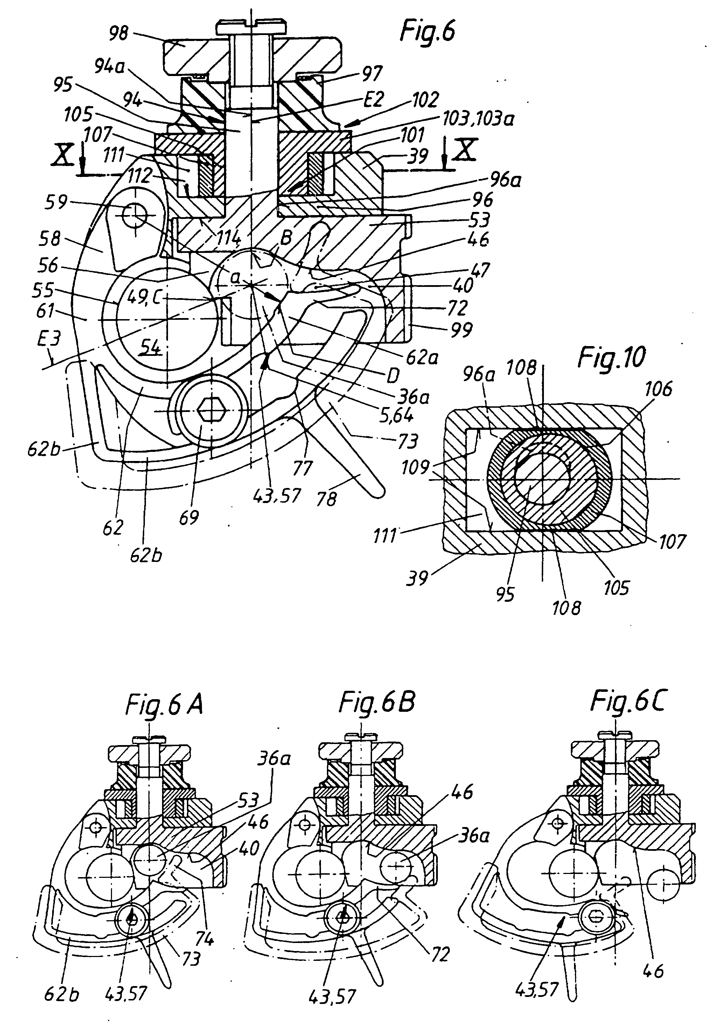

Jedes der beiden bezüglich der vertikalen Längsmittelebene E1 spiegelbildlich angeordneten Zentrikschlösser 42 weist ein Gelenk-Verriegungsteil 57 auf, das zwischen einer Verriegelungsstellung gemäß Figur 6, einer Schiebegelenk-Freigabestellung gemäß Figur 6A und 6B und einer Offenstellung gemäß Figur 6C verstellbar und in der jeweiligen Stellung lösbar feststellbar ist. Bei der vorliegenden Ausgestaltung wird das Sicherungsteil 57 durch den sichelförmigen Schloßbügel 43 gebildet, der mit seinem Fußende 58 im hinteren oberen Bereich des zugehörigen Gelenkgehäuses 39 um eine parallel zur Schwenkachse 5 verlaufende Gelenkachse 59 auf einem Gelenkbolzen schwenkbar gelagert ist, wobei er sich vom Fußende 58 ausgehend zunächst mit einem hinteren Bügelteil 61 zunächst nach unten und dann mit einem unteren Bügelteil 62 hakenförmig nach vorne erstreckt, wobei letzteres das Seitenführungsteil 54 und den zugehörigen Kugelkopf 36a mit Abstand untergreift und dabei in seiner Verriegelungsstellung gemäß Figur 6 mit seinem freien Ende in die zugehörige Gelenkausnehmung 40 hineinragt.

Der Schloßbügel 43 ist in einer sich parallel zur vertikalen Längsmittelebene E1 erstreckenden Vertikalebene E4 angeordnet und schwenkbar gelagert, die in der normalen Mittelstellung des Oberteils 37 den Mittelpunkt 64 des Kugelkopfes 36a enthält (siehe Figur 9). Der Schloßbügel 43 besteht aus hartem, elastischem Material, z.B. hartem Stahl oder Federstahl. In seiner Normalstellung weist der freie Endbereich 62a des unteren Bügelteils 62 einen radialen Abstand von der Schwenkachse 59 auf, der etwas kleiner ist als das Maß a zwischen der Schwenkachse 59 und der ihr abgewandten Mantelfläche 55 des Seitenführungsteiles 54. Infolgedessen wird beim Einschwenken des Schloßbügels 43 in die Verriegelungsstellung gemäß Figur 6 der freie Endbereich 62a des unteren Bügelteils 62 etwas radial nach außen ausgebogen, so daß es im Berührungspunkt D zwischen ihm und dem Kugelkopf 36a in radial einwärts gerichteter Richtung drückt und somit das Oberteil in den Berührungspunkten B, C gegen den Kugelkopf 36a zieht. Hierdurch ist das Oberteil 37a in der Vertikalebene E4, d.h. in der Längsrichtung X im Sinne einer Dreipunkt-Lagerung zentriert und sicher gelagert.

Eines der beiden Zentrikschlösser 42, hier das in der Figur 9 links angeordnete 5 Zentrikschloß 42a ist bezüglich der Längsrichtung der Schwenkachse 5 des Schwenkgelenkes 11, nämlich der Querrichtung Y, als in der Verriegelungsstellung des Schloßbügels 43 wirksames Festlager ausgebildet, während das andere, hier rechte Zentrikschloß 42b als Loslager ausgebildet ist. Dies wird durch eine in das Festlager 42a integrierte Formschlußverbindung gewährleistet, die in der O-Stellung eine Relativverschiebung zwischen dem Unter- und Oberteil 35,37a in der Längsrichtung der Schwenkachse 5 , d.h. der Querrichtung Y verhindert, jedoch ein Schwenken des Oberteils 37a um die Schwenkachse 5 ermöglicht. Wie Figur 9 deutlich zeigt, wird diese Formschlußverbindung durch eine Nut 66 im freien Endbereich 62a des unteren Bügelteiles 62 gebildet, die in der Vertikalebene E4 verläuft und an deren vorzugsweise durch eine Keilform gebildeten Nutflanken 67 der Kugelkopf 36a anliegt und somit der Schloßbügel 43 mit dem Oberteil 37a am Kugelkopf 36a in der Querrichtung Y zentriert wird. Im Bereich des Loslagers 42b ist der zugehörige Schloßbügel 43 in der Längsrichtung der Schwenkachse 5 dagegen nicht festgelegt. Hier ist die am Kugelkopf 36a anliegende Anlagetläche des freien Endbereiches 62a eine ebene Querfläche oder sie kann auch mit einem Radius, der größer ist als der Radius des Kugelkopfes 36a, konkav gerundet sein, wie es Figur 9 zeigt.

Die vorbeschriebene Zentrierung des Oberteils 37a gegenüber dem Unterteil 35 in Querrichtung Y ermöglicht es auch, die Krümmungsradien R (Figur 9) zwischen der Bennett-Führungsfläche 47 und der Seitenführungsfläche 49 in der Führungsausnehmung 40 etwas größer zu bemessen als den Radius des zugehörigen Kugelkopfes 36a. Hierdurch wird innenseitig von den Kugelköpfen 36a ein kleiner sichelförmiger Freiraum geschaffen. Diese Ausgestaltung ermöglicht bei einer Mediotrussionsbewegung einen sog. Initialen Knick am Anfang einer Bennett-Bewegung.

Die beiden Schloßbügel 43 liegen jeweils mit ihrer Innenseite an einer seitlich nach außen weisenden Anlagefläche 68 (Fig. 5) des zugehörigen Gelenkgehäuses 39 an, wodurch die seitliche Zentrierung des Oberteiles 35 gewährleistet ist. Zusätzlich sind die Schloßbügel 43 in einem radialen Abstand von der Schwenkachse 59 in der Vertikalebene E4 stabilisiert. Hierzu ist ein Stabilisierungsteil vorgesehen, an den der untere Bügelteil 62 auf seinem Schwenkweg entlang gleitet. Beim vorliegenden Ausführungsbeispiel wird das Stabilisierungsteil durch eine Stabilisierungsschraube 69 gebildet, die außenseitig vom unteren Bügelteil 62 in das jeweils zugehörige Gelenkgehäuse 39 eingeschraubt ist und mit ihrem Schraubenkopf innenseitig und/oder außenseitig seitliche Führungsflächen für den unteren Bügelteil 62 bildet und diesen somit seitlich stabilisiert.

Vom freien Ende 62a des unteren Bügelteiles 62 ist eine Bügelverlängerung 72 so radial schräg nach außen abgewinkelt angeordnet, daß sie sich in der Schiebegelenk-Freigabestellung gemäß Figuren 6A und 6B in etwa parallel zur sagittalen Führungsfläche 46 erstreckt. Die Anordnung ist so getroffen, daß in dieser Schiebegelenk-Freigabestellung, in der das Oberteil 37a gegenüber dem Unterteil 35 längs der sagittalen Führung verschiebbar ist (siehe insbesondere Figur 6B), die Bügelverlängerung 72 nach oben gegen den Kugelkopf 36a drückt. . Hierdurch ist nicht nur in der O-Stellung des Schwenkgelenkes 11, sondern auch in dessen wahlweiser Schiebestellung die Anlage der sagittalen Führungsflächen 46 an den zugehörigen Kugelköpfen 36a gewährleistet. Die beabsichtigten Unterkieferbewegungen sind somit anatomisch nachvollziehbar, ohne daß der Behandler manuell nachhelfen muß, um die Anlage an der sagittalen Führungsfläche 46 zu gewährleisten, wie es bei bekannten Ausgestaltungen der Fall ist. Der Behandler kann somit seine Aufmerksamkeit und seine Handhabung bei einer Verschiebung mehr auf die Gegebenheiten im Bereich der Zähne richten.

Die Bügelverlängerung 72 kann auch die Funktion erfüllen, daß in der Schiebegelenk-Freigabestellung gemäß Figuren 6A und 6B das Oberteil 37a vom Unterteil 35 nicht demontierbar ist. Dies erfolgt dadurch, daß die Bügelverlängerung 72 die unterseitige Öffnung der Gelenkausnehmung 40 soweit schließt, daß der zugehörige Kugelkopf 36a nicht herausgeführt werden kann, s.Fig. 6B.

Die vorbeschriebene elastische Andruckkraft und Demontagesicherung kann auch von einem federelastischen Anbauteil des Schloßbügels 43 gewährleistet werden. Ein solches Federteil ist in den Figuren 6-6C andeutungsweise und in den Figuren 7 und 8 vergrößert dargestellt und mit 73 bezeichnet. Es weist eine das freie Ende des unteren Bügelschenkels 62 überragende Federzunge 71 auf, die mit elastischer Federkraft in Richtung der Schwenkachse 5 gegen den Kugelkopf 36a drückt.

Es wird somit nicht nur die sagittale Führungsfläche 46 nach unten gegen den Kugelkopf 36a vorgespannt, sondern es wird auch das Gelenkgehäuse 39 schräg nach unten gezogen, nämlich in die O-Stellung des Gelenkes 11. Hierdurch wird die Führung des Oberteiles 37a wesentlich erleichtert, weil die Gelenkanordnung aufgrund der Federkräfte selbsttätig in die O-Stellung zurückkehrt. Zumindest wird diese Rückkehrbewegung unterstützt.

Die Führungs- oder Stabilisierungsschraube 69 erfüllt bei der vorliegenden Ausgestaltung auch den Zweck, den zugehörigen Schloßbügel 43 in seiner Schiebegelenk-Freigabestellung (Figuren 6A, 6B) elastisch überdrückbar zu fixieren und in der Schließstellung (Fig. 6) oder Offenstellung (Fig. 6C) der Schwenkbewegung zu begrenzen. Hierzu können am Bügelteil 62 Vertiefungen vorgesehen sein, in die der Schaft der Stabilisierungsschraube 69 aufgrund der Elastizität des Bügelteils 62 elastisch einzurasten vermag. Vorzugsweise ist in einem radial nach außen gerichteten Abstand am unteren Bügelteil 62 ein zweites unteres Bügelteil 62b angeordnet, das etwa parallel zum ersten Bügelteil 62 gekrümmt ist und an seinem hinteren Ende vorzugsweise einteilig am Schloßbügel 43 angebunden ist, hier am hinteren Bügelteil 61. Bei dieser Ausgestaltung ist vorzugsweise an der Innenseite des zweiten, unteren, elastisch ausbiegbaren Bügelteils 62b eine Rastausnehmung 77 zur überdrückbaren Verrastung mit dem Schaft der Stabilisierungsschraube 69 in der Schiebegelenk-Freigabestellung vorgesehen. Für die Offenstellung und/oder Verriegelungsstellung des Schloßbügels 43 können weitere solcher Rastausnehmungen 77 oder auch die Bewegungsbahn zwischen den Bügelteilen 62,62b begrenzende Anschläge vorgesehen sein. An der Außen- bzw. Unterseite des zweiten Bügelteiles 62b ist ein sich radial nach außen erstreckenden stabförmiges Griffteil 78 angeformt, an dem der Schloßbügel 43 zu seiner wahlweisen Verschwenkung manuell ergriffen werden kann.

Wie Figur 7 deutlich zeigt, besteht das Federteil 73 aus einem quaderförmigen Fußstück 79, von dessen unteren Ende sich bogenförmig nach vorne und oben ein Federteilbügel 83 erstreckt, der an seinem freien Ende die Federzunge 71 trägt, die sich schräg aufwärts nach vorne erstreckt. Wie Figur 8 zeigt, sind der Federteilbügel 83 und die Federzunge 71 gegenüber dem Fußstück 79 nach außen versetzt angeordnet. Im Fußstück 79 ist ein vertikaler, nach innen offener Steckschlitz 82 eingeformt, mit dem das Fußstück 79 von außen auf einen sich aufrecht erstreckenden Fußabschnitt 62b des unteren Bügelteiles 62b aufsteckbar und zwischen den Bügelteilen 62, 62b formschlüssig gehalten ist. Dabei befinden sich - in der Draufsicht gesehen - der Federteilbügel 83 und die Federzunge 71 außenseitig neben dem zugehörigen Schloßbügel 43, wobei die Federzungen 71 beider Federteile 73 gegen den verjüngten Gelenkkopfschaft 36b des zugehörigen Gelenkkopfes 36 drücken. Die bezüglich der vertikalen Längsmittelebene E1 spiegelbildlich angeordneten und ausgebildeten Federteile 73 sind vorzugsweise Spritzteile aus einem elastischen Kunststoff.

Im folgenden werden die vorerwähnten drei Freiheitsgrade für das Lagerteil 53 jedes 5 Schwenk-Schiebelagers 11 beschrieben.

Der erste Freiheitsgrad umfaßt ein Drehlager 83 (Fig. 11), in dem das zugehörige Gelenkgehäuse 39 um die Schwenkachse 5 drehbar und in der jeweiligen Drehstellung feststellbar ist. Hierdurch ist eine Neigung der sagittalen Führungsbahn 46 (die in der Fachsprache auch mit Kondylenbahn bezeichnet wird) wahlweise in einem Winkelbereich zwischen etwa -15 und +90° zur Frankfurter Horizontalen einstetibar. Zur Erleichterung der Einstellung ist im Bereich jeder Teilungsfuge zwischen dem zugehörigen Gelenkgehäuse 39 und dem Nabenteil 38 des Oberteils 37a eine Skala am Rand des Nabenteils 38 oder des Gelenkgehäuses 39 angebracht. Vorzugsweise zwei Skalen, von denen die eine die Drehstellung zur Kamper'schen Ebene und die andere zur Frankfurter Horizontalen anzeigt. Beide Drehlager 83 sind bezüglich der vertikalen Längsmittelebene E1 spiegelbildlich ausgebildet.

Bei der vorliegenden Ausgestalrung weist jedes Gelenkgehäuse 39 einen nach innen koaxial vorspringenden runden Lagerzapfen 84 auf, der mit geringem Bewegungsspiel in einer koaxialen Lagerbohrung des Nabenteils 38 drehbar gelagert ist. Durch eine Anlage des Gelenkgehäuses 39 mit einer Ringschulterfläche 85 an der seitlichen Stirnfläche des Nabenteils 38 ist die seitliche genaue Lage des zugehörigen Lagergehäuses 39 gesichert. Im Lagerzapfen 84 ist koaxial ein zylindrischer Zugbolzen 86 drehbar gelagert, von dem innenseitig koaxial ein Gewindeschaft 87 vorspringt, der in eine Ausnehmung 88 hineinragt, die mittig im Nabenteil 38 angeordnet ist und nach hinten offen ist. Auf jedem Gewindeschaft 87 der Zugbolzen 86 ist eine Spannmutter 89 mit einem radialen Spannhebel 91 aufgeschraubt, mit der der vorzugsweise längsverschiebbar jedoch undrehbar in einer radialen Wand 92, z.B. ein fest eingesetzten Einsatzstück gelagerte Zugbolzen 86 nach innen spannbar ist, wobei er mit einem Bolzenkopf 86a das zugehörige Gelenkgehäuse 39 gegen das vorhandene axiale Widerlager spannt und somit gegen unbeabsichtigte Verdrehung sichert. Mit der Dreheinstellung der Gelenkgehäuse 39 werden die zugehörigen Lagerteile 53 bezüglich der Neigung ihrer sagittalen Führungsfläche 46 eingestellt.

Zur zusätzlichen axialen Sicherung der drehbaren Gelenkgehäuse 39 in der Lagernabe 38 kann eine Umfangsnut 90 in der Außenmantelfläche des Lagezapfens 84 vorgesehen sein, in die ein an der Lagernabe 38 befestigtes Eingriffsglied mit geringem Bewegungsspiel einfaßt. Letzteres wird vorzugsweise durch einen in einem sekantialen Loch sitzenden Stift 90a gebildet, der in die halbrunde Umfangsnut 90 einfaßt und somit eine axiale Verschiebung bei Gewährleistung einer Drehung verhindert.

Der zweite Freiheitsgrad wird durch ein Drehlager 94( Fig. 6) gebildet, in dem jedes Lagerteil 53 um eine vertikale Drehachse 94a drehbar und bei jeweiligen Dreheinstellungen feststellbar ist. Hierdurch kann ein wahlweiser Bennettwinkel 48 von z.B. etwa 5° bis 25° eingestellt werden. Die vertikalen Drehachsen 94a schneiden die Schwenkachse 5, d.h. die Lagerteile 53 sind horizontal um den O-Punkt des Schwenk-Schiebelagers 11 einstellbar. Bei der vorliegenden Ausgestaltung weist jedes Lagerteil 53 einen vertikal nach oben ragenden Lagerbolzen 95 auf, der die darüber befindliche Wand 96 des zugehörigen Gelenkgehäuses 39 in einem Loch 96a nach oben durchfaßt und überragt. Mit einer auf ein endseitiges Gewinde des Lagerbolzens 95 aufschraubbaren und z.B. mittels einer Hülle 97 gegen die vorzugsweise abgeflachte Oberseite des Gelenkgehäuses 39 wirksame Spannmutter 98 läßt sich das Lagerteil 53 in seiner jeweiligen Dreheinstellung festspannen und wieder lösen. Zur Erleichterung der manuellen Verdrehung sind an der Vorderseite des Lagerteils 53 Griffnuten 99 oder Griffstege vorgesehen. Mittels einer Skala im Teilungsfugenbereich zwischen dem Gelenkgehäuse 39 und einem mit dem Lagerteil 53 drehbaren Teil, z.B. die Hülse 97, läßt sich die gewünschte Drehstellung eines oder beider Lagerteile 53 genau einstellen.

Der dritte Freiheitsgrad des Lagerteiles 53 besteht darin, daß es in Längsrichtung der Schwenkachse 5 feststellbar und in der jeweiligen Feststellposition feststellbar ist. Dies wird durch eine in Querrichtung Y wirksame Seitenverstellführung 101 ermöglicht, die in die Lagerung des Lagerbolzens 95 im Gelenkgehäuse 39 integriert ist. Hierzu ist ein Lingloch 96a vorzusehen. Es ist vorteilhaft, der Seitenverstellführung 101 ein Getriebe 102 zuzuordnen, das beim vorliegenden Ausführungsbeispiel durch ein Exzentergetriebe gebildet ist. Bei Betätigung eines zugehörigen Antriebselements, hier eines Exzenterlagerringes 103 wird dessen Drehbewegung in eine längs der Schwenkachse 5 gerichtete Seitenbewegung für das Lagerteil 53 umgewandelt. Der Exzenterlagerring 103 weist eine vertikale Lagerbohrung 104 auf, mit der er auf dem Lagerbolzen 95 mit geringem Bewegungsspiel drehbar gelagert ist. Der Exzenterlagerring 103 weist einseitig ein zur Lagerbohrung 104 exzentrisches Nabenteil 105 auf, mit dem er mit geringem Bewegungsspiel in der vertikalen Lagerbohrung 106 eines Ausgleichsrings 107 drehbar gelagert ist, der den Zweck erfüllt, die quer zur Schwenkachse 5 gerichtete Bewegungskomponente des Exzenterantriebs auszugleichen. Hierzu ist der Ausgleichsring 107 beidseitig mit zwei sich rechtwinklig zur Schwenkachse 5 erstreckenden vertikalen Führungsflächen 108 versehen, die durch äußere Abflachungen des Ausgleichsrings 107 gebildet sind und an zwei entsprechenden Führungsflächen 109 einer quer zur Schwenkachse 5 gerichteten Längsfuhrung verschiebbar geführt und auf diese Weise zugleich gegen Verdrehung gesichert sind. Die Führungsflächen 109 sind die einander zugewandten Flächen einer - von oben gesehen - etwa rechteckigen Ausnehmung 111 im zugehörigen Gelenkgehäuse 39, an deren horizontaler Ausnehmungsgrundfläche 112 das exzentrische Nabenteil 105 und der Ausgleichsring 107 gleiten. Die durch die Ausnehmung 111 verjüngte Führungswand 96 des Gelenkgehäuses 39 bildet an ihrer Unterseite eine horizontale Führungsfläche 114 für das zugehörige Lagerteil 53. In den Seitenverstellführungen 101 läßt sich jeweils das zugehörige Lagerteil 53 stufenlos in einen Verstellbereich von 0 bis etwa 2 mm einstellen und feststellen, wozu die Spannmutter 98 dient. Der Verstellbereich ist von einer zugehörigen Normalposition jeweils nach innen gerichtet. Hierdurch läßt sich für jedes Lager 11 ein sog. initialer Knick im Anfangsbereich der zugehörigen Bennett-Bewegung einstellen. Hierzu weist der Exzenterlagerring 103 vorzugsweise als Flansch 103a ausgebildet, der auf dem Ausgleichsring 107 und/oder auf der Oberseite des zugehörigen Gelenkgehäuses 39 aufliegt und vorzugsweise an seinem Außenumfang Griffnuten oder eine Rändelung aufweist, die den manuellen Angriff zum Drehen des Exzenterlagerrings 103 erleichtern. Mittels einer Skala im Teilungsfugenbereich, vorzugsweise zwischen dem Flansch 103a und dem Gelenkgehäuse 39 läßt sich die jeweilige Einstellung messen und anzeigen. Vorzugsweise weist der Flansch 103a eine vertikal ausbiegbare Rastzunge auf, die elastisch in Rastvertiefungen an der Oberseite des Ausgleichsringes 107 oder des Gelenkgehäuses 39 einzurasten vermag und somit eine Arretierung für Stufeneinstellungen bildet.

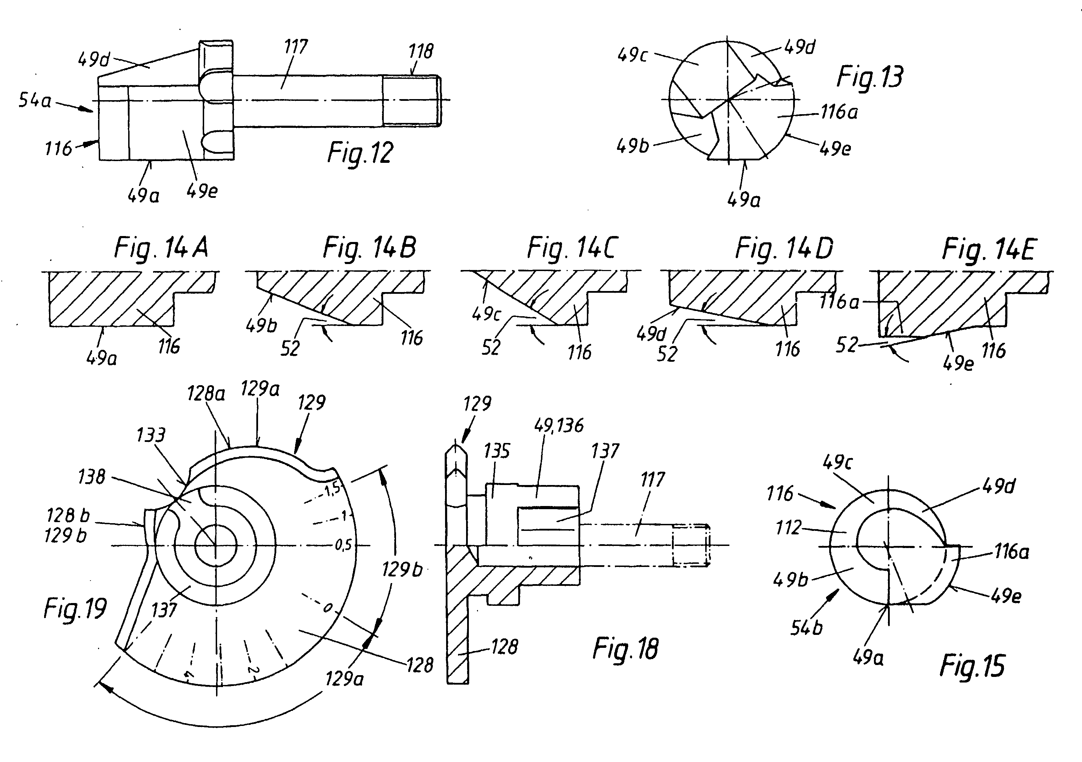

Bei jedem Gelenk 11 ist dem Lagerteil 53 ein weiterer vierter Freiheitsgrad zur wahlweisen Einstellung des Shiftwinkels 52 zugeordnet. Da bei der vorliegenden Ausgestaltung die rückseitige Seitenführungsfläche 49 Teil eines vom zugehörigen Lagerteil 53 separaten Bauteils, nämlich des Seitenführungsteiles 54 ist, läßt sich der Shiftwinkel 52 der Seitenführungsfläche 49 unabhängig von den übrigen Führungsflächen des zugehörigen Lagerteiles 53 durch Austausch oder Verstellung des Seitenführungsteils 54 in Stufen oder stufenlos einstellen. Hierzu dienen unterschiedliche Seitenführungsflächen 49 mit unterschiedlichen Shiftwinkeln 52, die an einem oder mehreren austauschbaren Seitenführungsteilen angeordnet sein können. Die Figuren 12 bis 14 zeigen ein Seitenführungsteil 54a, an dem mehrere unterschiedliche Seitenruhrungstlächen 49a bis 49e in Umfangsrichtung versetzt zueinander angeordnet sind. Eine dieser Seitenführungsflächen, nämlich die Seitenführungsfläche 49a ist parallel zur Längsachse des Seitenführungsteils 54a und auch zur Schwenkachse 5 angeordnet und sie ersetzt deshalb die zylindrische Mantelfläche 55 des in Figur 6 dargestellten zylindrischen Seitenführungsteils 54.

Die Seitenführungsflächen 49a bis 49e sind beim Seitenführungsteil 54a, gemäß Figuren 14 bis 16 am Kopfteil 116 eines Bolzenschaftes 117 angeordnet. Beim vorliegenden Ausführungsbeispiel sind fünf Shiftwinkel 52 verwirklicht, die gegeneinander abgestuft sind und sich über einen Bereich von etwa -10 bis 15° für den Shiftwinkel der Seitenführungsfläche 49e bis etwa +30 bis 35° für den Shiftwinkel der Seitenführungsfläche 49c erstrecken. Die Seitenführungsfläche 49a ist in Y-Richtung achsparallel ausgebildet, so daß ihr Shiftwinkel gleich Null ist. Die Seitenführungsfläche 49e mit dem im negativen Bereich liegenden Shiftwinkel 52 läßt sich durch einen segmentförmigen radialen Vorsprung 116a im seitlich äußeren Endbereich des Kopfteiles 116 verwirklichen.

Der zylindrische Bolzenschaft 117 weist an seinem freien Ende ein Gewinde 118 auf, und er ist mit dem Bolzenschaft 117 von außen in eine Lagerbohrung des zugehörigen Gelenkgehäuses 39 einsteckbar und darin mit geringem Bewegungspiel gelagert. Die Lagerbohrung ist bezüglich der Schwenkachse 5 soweit nach hinten und um ein paar mm nach unten versetzt angeordnet, daß die Seitenführungsflächen 49a bis 49e durch Drehen dieses Seitenführungsteiles 54a in eine dem Berührungspunkt C entsprechende Lage schwenkbar sind. Zur Halterung des Bolzenschaftes 117 ist eine auf den Bolzenschaft 117 aufschraubbare Gewindemutter 119 (Fig. 4 und 5) mit einer Rändelung an ihrem Umfang vorgesehen, die in einer oberseitig und rückseitig offenen Schlitzausnehmung 120 im zugehörigen Gelenkgehäuse 39 sitzt und die so bemessen ist, daß ihr Umfang, an dem sie ergreifbar ist, von der Außenfläche des Gelenkgehäuses 39 geringfügig vorragt. Zum Einstellen wird das Seitenführungsteil 54a am Kopfteil 116 ergriffen und nach Lösen der Gewindemutter 119 so verdreht, daß in der O-Stellung des Gelenkes 11 die zugehörige Seitenführungsfläche 49 am Kugelkopf 36a in der Mittelstellung des Oberteils 37a anliegt.

Es ist im Rahmen der Erfindung auch möglich, ein mit dem vorbeschriebenen vergleichbares Seitenführungsteil 54b gemäß Figur 15 zu verwenden, dessen Kopfteil 116 auf seiner Mantelfläche mehrere sich bezüglich des Shiftwinkels 51 voneinander unterscheidende Seitenruhrungsflächen 49a bis 49e aufweist, die in Umfangsrichtung in Form einer Mantelkurvenfläche 116 stufenlos ineinander übergehen. Hierdurch ist eine stufenlose Einstellung des Shiftwinkels 52 möglich. Im übrigen können das Seitenführungsteil 54b und auch das Seitenführungsteil 54 gemäß Fig. 6 wie das Seitenführungsteil 54a ausgebildet sein und entsprechend spannbar und lösbar sein.

Den Gelenken 11 ist vorzugsweise eine in der Fig. 16 dargestellte Protrusions-Führung 125 bzw. Längsführung mit einer Protrusionsbewegungs-Einstellvorrichtung 126 zugeordnet, die ein zur vertikalen Längsmittelebene E1 paralleles Verschieben des Oberteils 37a in den Gelenken 11 ermöglicht. Hierzu ist jedem Gelenk 11 ein oberteilseitiges und ein unterteilseitiges Führungsteil zugeordnet, die in Längsrichtung des Artikulators 1 verschiebbar aneinander geführt sind. Bei der vorliegenden Ausgestaltung ist auf jeder Seite eine vorzugsweise durch eine Umfangsnut im zugehörigen Gelenkkopfschaft 36b gebildete Führungsnut 127 vorgesehen, in die ein leisten- oder scheibenförmiger Führungsschieber 128 einfaßt und während der Protrusionsbewegung darin geführt ist. Hierdurch ist das Oberteil 37 längsgeführt, obwohl die Bennett-Führungsfächen 47 die Kugelköpfe 36a freigeben.

Der Führungsschieber 128 ist vorzugsweise so ausgebildet, daß er ein Getriebeantriebsteil oder Verstellteil für eine nach vorne gerichtete Protrusionsbewegung der am Oberteil angeordneten Protrusionsbewegungs-Einstellvorrichtung 126 bildet. Der Führungsschieber 128 ist ein Drehteil, das hinter dem zugehörigen Gelenkkopf 36 angeordnet ist und bezüglich einer Drehachse im Sinne einer Steigung bzw. exzentrisch ausgebildet ist. Der drehscheibenförmige Führungsschieber 128 kann am Seitenführungsteil 54 befestigt und daran ein- oder zweistückig ausgebildet sein. Hierzu kann der Führungsschieber 128 einen Bolzenschaft 117 aufweisen, wie es in Fig. 18 angedeutet ist, mit dem er als Austauschteil gegen einen Seitenführungsteil 54, 54a, 54b montierbar ist. Aufgrund der Steigung wird beim gleichmäßigen Verdrehen beider Führungsschieber 128 in die Antriebsrichtung aufgrund der exzentrischen Steigungsfläche 129 das Oberteil 37a nach hinten verschoben, wobei die Führungsschieber 128 die Funktion von Exzentergetrieben erfüllen. Die Steigung der Führungsschieber 128 ist vorzugsweise so groß bemessen, daß durch deren Verdrehung eine Protrusionsbewegung von mehreren mm, z.B. bis 5 oder auch bis etwa 10 mm ausgeführt werden kann. Für eine Rückbewegung des Oberteils 37a sind die Führungsschieber 128 umgekehrt zu verdrehen. Dabei kann das Oberteil 37a durch die federelastische Rückstellkraft des Schloßbügels 43 bzw. dessen Federteils 73 selbsttätig zurückgestellt werden, wobei die vorhandenen Exzentergetriebe die Rückbewegung gezielt steuern.

Es ist im Rahmen der Erfindung möglich, die Führungsschieber 128 jeweils mit einem ebenfalls ein Getriebeantriebsteil oder Verstellteil bildenden, in Fig. 17 andeutungsweise dargestellten hakenförmigen Führungsteil 131 zu versehen, das mit der Steigungsfläche 129 eine Führungsnut 130 bildet, wodurch eine auch für die Bewegung nach hinten gerichtete Zwangsführung geschaffen ist.

An dem insbesondere in Fig. 19 deutlich dargestellten halbkreisförmigen Scheibenumfang der Führungsschieber 128 ist eine Skala vorgesehen, die von der O-Stellung ausgehend eine mm-Anzeige bzw. -Ablesung für den Protrusionsbereich 129a der Steigungsfläche und den Retrusionsbereich 129b ermöglicht. Zwischen diesen beiden Bereichen ist eine gerundete Ausnehmung 133 am Umfang der vorhandenen Scheibenform vorgesehen, die eine Unterbrechung der Protrusions-Führung 125 darstellt. In der Außerfunktionsstellung der Protrusions-Führung 125 befinden sich die Führungsschieber 128 mit ihren Ausnehmungen 133 jeweils im Bereich des zugehörigen Gelenkkopfschaftes 36b. In dieser O-Stellung kann das Oberteil 37a Laterotrusionsbewegungen ausführen, weil die Führungskanten 128a des Führungsschiebers 128 mit den zugehörigen Führungsnuten 127 außer Eingriff sind. Von der Ausnehmung 133 aus, die sich in der O-Stellung (Schlußbißstellung) mit dem Gelenkkopfschaft 36b deckt, weist die Führungskante 128a des Protrusionsbereichs 129a eine positive Steigung auf, während die Führungskante 128b des Retrusionsbereichs 129b eine negative Steigung aufweist, d.h. abfällt. Dabei sind beide Führungskanten konvexkurvenförmig geformt. Hinter der Ausnehmung 133, beim vorliegenden Ausführungsbeispiel in der der Steigung des Führungsschiebers 128a entgegengesetzten Richtung, schließt sich an die Ausnehmung 133 jeweils eine weitere Ausnehmung 134 an, in die der Gelenkkopfschaft 136b zwecks Ausführung von Retrusionsbewegungen einführbar ist. Der radiale Abstand der Ausnehmung 134 von der Mittelachse 152 ist geringer als der Abstand der Ausnehmung 133 von der Mittelachse 152. Zwischen den Kreisbogenabschnitten der Ausnehmungen 133, 134 ist ein kleiner Sattel gebildet.

Innenseitig von den scheibenförmigen Führungsschiebern 128 ist ein Kopfstück 135 am Bolzenschaft 117 oder am Führungsschieber angeformt, das im mittleren Bereich der Ausnehmung 133 einen Mantelflächenabschnitt 136 aufweist, der z.B. eine zylinderabschnittförmige Seitenführungsfläche 49 für Laterotrusionsbewegungen bildet und achsparallel oder im Sinne eines gewünschten Shiftwinkels 52 geneigt ausgebildet sein kann. Zu beiden Seiten neben diesem Mantelflächenabschnitt 136 ist das Kopfteil 135 im Sinne einer Ausnehmung 137 im Querschnitt verjüngt, wodurch ein axialer, den Mantelflächenabschnitt 136 tragender Ansatz 138 gebildet ist.

Beide vorhandenen Führungsnuten 127 und die Führungskanten 128a, 128b der Führungsschieber 128 sind im Querschnitt divergent bzw. konvergent, insbesondere keilförmig ausgebildet, um die Einführung der Kantenbereiche in die Führungsnuten 127 zu erleichtern. Hierzu weisen die Kantenbereiche der Führungsschieber 128 und die Führungsnuten 127 einander angepaßte schräge Flanken auf.

Der vorbeschrieben einstellbare Artikulator 1 ist aufgrund seiner Einstellbarkeit für Arbeiten mit gehobenen Ansprüchen einsetzbar, weil die an ihm möglichen Oberkieferbewegungen den anatomischen Verhältnissen des menschlichen Körpers nahekommen. Es gibt jedoch auch zahntechnische Arbeiten, für die ein solcher einstellbarer Artikulator 1 nicht erforderlich ist, und die auch mit sog. Mittelwertartikulatoren ausgeführt werden können, bei denen eine Einstellung der vorbeschriebenen Freiheitsgrade nicht möglich ist. Die Protrusions-Führung 125 und Protrusionsbewegungs-Einstellvorrichtung 126 kann auch bei einem solchen nach Mittelwerten ausgebildeten Oberteil (nicht dargestellt) vorgesehen sein.

Während der Fertigstellung eines Unterkiefer- und/oder Oberkieferzahnmodells OK, UK ist es in vielen Fällen erforderlich, das Zahnmodell zwischendurch vom Artikulator 1 zu entfernen, um z.B. in besonderer Weise zu vermessen, und wieder am Artikulator 1 zu montieren. Um dies zu ermöglichen, ist es bekannt, zwischen dem Primärsockel 19 und dem zugehörigen Zahnmodell UK, OK eine formschlüssig wirksame Zentriervorrichtung 137 vorzusehen, die bei sicherer Anlage des Zahnmodells am zugehörigen Primärsockel 19 ein horizontales relatives Verstellen des Zahnmodells UK, OK verhindert.

Bei der vorliegenden Ausgestaltung sind die Primärsockel 19 bzw. die Zentriervorrichtungen 137 bezüglich der Bezugsebene E4 bzw. des Festlagers 42a am zugehörigen Artikulatorarm 2, 3 genau fixiert, hier mittels den Paßstiften 16 und zugehörigen Paßlöchern 17. Außerdem sind die Primärsockel 19 bzw. die Zentriervorrichtungen 137 in genauem Bezug zu einer in oder parallel zur Vertikalebene E3 verlaufenden Bezugsebene angeordnet und paßgenau ausgerichtet. Zur paßgenauen Anordnung bezüglich der vertikalen Bezugsebene E4 (Fig. 9) kann z.B. der an der Festlager-Seite vertikal und längs angeordnete Anlagefläche 68 zugehörige Schloßbügel 43 dienen. Zur paßgenauen Anordnung der Primärsockel 19 kann eine nicht dargestellte Vorrichtung dienen.

Diese paßgenaue Anordnung der Paßflächen der Arretiervorrichtung 137 bezüglich den Bezugsebenen ermöglicht einen wahlweisen Austausch eines oder mehrerer Oberteile 37a, wobei die Paßgenauigkeit der Paßstellen für die Zahnsockel UK bzw. OK gewährleistet ist.

Außerdem ermöglicht diese Ausgestaltung eine sogenannte Überkreuzmontage, d.h. ein Zahnsockel UK bzw. OK kann auch in einen zweiten, in vorbeschriebener Weise erfindungsgemäß ausgestalteten Artikulator 1 eingebaut werden. Dies hat den Vorteil, daß der Artikulator 1 mit dem zugehörigen Zahnmodell nicht mitgeschickt werden muß, um eine paßgenaue Anordnung des Unterkiefer- und/oder Oberkieferzahnmodells UK, OK zu ermöglichen.

Mit 143 sind im Tragus medialis von den Rahmenschenkeln 7 seitlich abstehende Dorne 143 für einen Gesichtsbogen (nicht dargestellt) bezeichnet.

Der Artikulator eignet sich auch dazu, Distraktions-Bewegungen oder -Einstellungen in den Schwenk-Schiebegelenken 11 vorzunehmen. Hierzu ist kein Umbau des Artikulators mit zusätzlichen Bauteilen erforderlich, sondern eine Umstellung vorhandener Bauteile, hier der Führung 125 oder Einstellvorrichtung 126.

Zum Ausführen einer Distraktionsbewegung im Bereich eines oder beider Schwenk-Schiebegelenke 11 ist der jeweils zugehörige Spannhebel 91 in seine Lösestellung zu schwenken und somit die zugehörige Feststellvorrichtung für das jeweilige Gelenkgehäuse 39 zu lösen und dann das Gelenkgehäuse 39 nach vorne soweit zu schwenken, daß mit der Führung 125 etwa vertikale Bewegungen ausgeführt werden können und das Gelenkgehäuse 39 durch ein Festziehen des zugehörigen Spannhebels 91 wieder festzustellen. In dieser Schwenkstellung des Gelenkgehäuses 39 können mit der Einstellvorrichtung 126 wahlweise therapeutische Positionen der Schwenk-Schiebegelenke 11 in etwa vertikaler Richtung eingestellt werden, in denen das Gelenkgehäuse 39 bezüglich des zugehörigen Kugelkopfes 36a einen nach oben oder nach unten gerichteten Abstand von der Schlußbißstellung aufweist. Je nach konstruktiver Ausgestaltung der Einstellvorrichtung 126 können diese Einstellungen in Stufen oder stufenlos erfolgen, wobei die Größe der Einstellung an die gewünschte therapeutische Position des zugehörigen Schwenk-Schiebegelenks 11 zu bestimmen ist.

In dieser Distraktionsstellung des Gelenkgehäuses 39 reicht eine etwa aufrecht verlaufende Distraktionsbewegung aus, um eine bestimmte Distraktionsstellung einzustellen. Es ist deshalb besonders vorteilhaft und optimal, das Galank gehäuse 39 zur Einstellung der Distraktionsstellung so weit zu schwenken, daß die Distraktionsbewegungsrichtung oder die sagittale Führungsfläche 46 im wesentlichen rechtwinklig zur Protrusionsebene angeordnet ist, vorzugsweise etwa vertikal. In dieser Stellung sind bei den Distraktionsbewegungen zur Einstellung der gewünschten Distraktion Protrusionsbewegungen ausgeschlossen. Es gibt Artikulatoren, bei denen die sich parallel zur Okklusionsebene erstreckende Campersche Ebene geneigt oder - wie bei der vorliegenden Ausgestaltung - parallel zur Standfläche des Artikulators 1 und somit horizontal angeordnet ist. Bei der vorliegenden Ausgestaltung ist die sagittale Führungsfläche 46 in der Distraktions-Schwenkstellung des Gelenkgehäuses 39 somit etwa vertikal angeordnet, insbesondere im Bereich der Schlußbißstellung bis zu einigen Millimetern, vorzugsweise nach beiden vertikalen Richtungen.

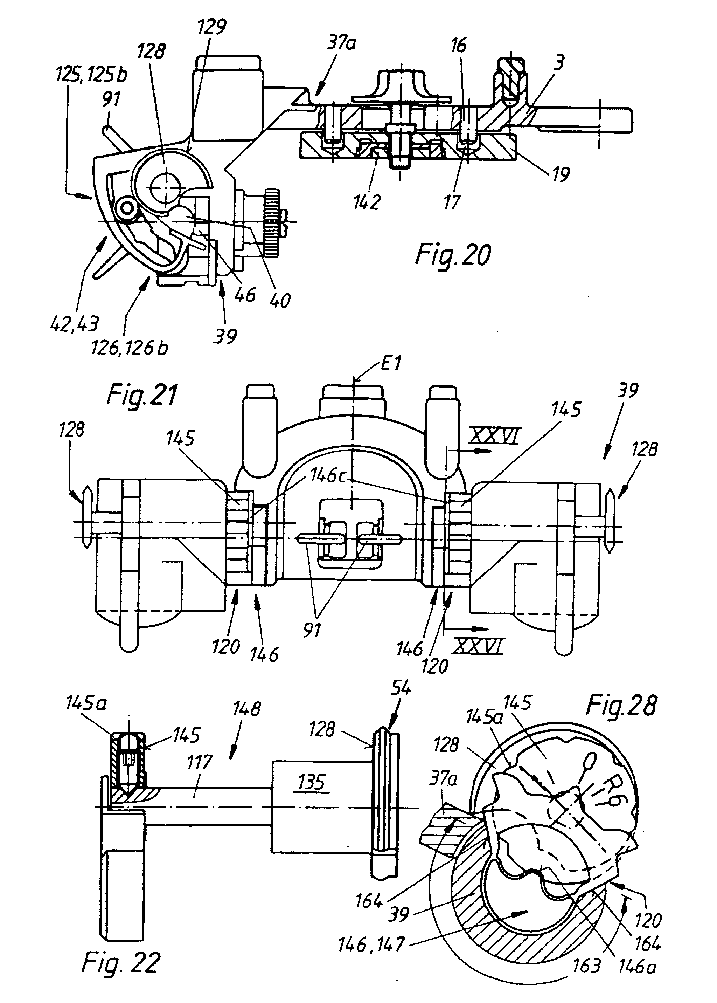

Bei der Ausgestaltung gemäß den Fig. 20 und folgende, bei der gleiche oder vergleichbare Teile mit gleichen Bezugszahlen bezeichnet sind, besteht die Protrusions/Distraktions-Einstellvorrichtung 126a, 126b jeweils aus einem Protrusions/Distraktions-Führungs- oder Antriebsteil 54 mit einem zylindrischen Bolzenschaft 117 und einem an seinem einen, insbesondere äußeren, Ende angeordneten Antriebsteil in Form einer Exzenter- oder Kurvenscheibe 128. Am anderen, insbesondere inneren Ende des Bolzenschaftes 117 ist ein Drehantriebsglied, insbesondere in Form einer Dreh-Antriebsscheibe angeordnet, die außerdem in Form eines ersten Rastelements, hier in Form einer Rastscheibe 145, ausgebildet ist. Letztere wirkt mit einem Gegenrastelement, hier in Form eines Rastfederteils 146 zusammen, das eine elastisch nachgiebig angeordnete Rastnase 146a aufweist, die mit am Umfang der Rastscheibe 145 angeordneten Rastausnehmungen 145a rastend zusammenwirkt und somit bestimmte Drehstellungen des Antriebsteils 128 vorgibt. Die Rastscheibe 145 und das Rastfederteil 146 bilden somit eine lösbare oder elastisch nachgiebige und überdrückbare Rastvorrichtung 147. Die aus den vorgenannten drei Hauptbauteilen 54, 145, 146 bestehende Baueinheit 148 ist so ausgestaltet, daß sie ohne eine Ausgestaltungsveränderung des Artikulators 1 gegen ein Führungsteil 54 durch Betätigung von Spannhebeln 91 austauschbar und somit nachrüstbar ist. D.h., durch den Einbau der Baueinheit 148 läßt sich der Artikulator 1 so umrüsten, daß an ihm definierte Protrusions- und/oder Distraktions-Bewegungen und Einstellungen vorgenommen werden können.

Wie bereits bei der Ausgestaltung gemäß Fig. 18 und 19 weist auch hier das Führungsteil 54 den Bolzenschaft 117, einen verdickten Kopfteil 135 und das endseitig angeordnete Antriebsteil 128 auf. Die Steigungsfläche 129 erstreckt sich bei der vorliegenden Ausgestaltung über einen Winkel 151 von etwa 270°. Hierdurch lassen sich mit größeren Einstell- bzw. Schwenkwegen und günstigeren Übersetzungsverhältnissen die Protrusions- bzw. Distraktionsbewegungen genauer und handhabungsfreundlicher einstellen. Über diesen Winkelbereich der Steigungsfläche 129 erstreckt sich auch die keilfärmige Führungskante 128a, die in die zugehörige Führungsnut 127 einfaßt. Am Anfang der Steigungsfläche 129 ist die Ausnehmung 133 angeordnet, die eine Unterbrechung der Führung 125 (Protrusions- bzw. Distraktions-Führung) darstellt und im Zusammenhang mit dem vorbeschriebenen Ausführungsbeispiel beschriebene Seitenbewegungen ermöglicht. Die Größe und Form der Kontur der Ausnehmung 133 ist an den zugehörigen Umfangsabschnitt des Gelenkzapfens 36b angepaßt. Auch hier kann das Kopfteil 135 mit seiner Mantelfläche eine sich parallel zur Mittelachse 152 des Führungsteils 54 oder dazu im Sinne eines positiven oder negativen Shiftwinkels 52 erstreckende Seitenführungsfläche 49a aufweisen. Bei der vorliegenden Ausgestaltung besteht das Führungsteil 54 mit dem Bolzenschaft 117 und dem Führungsschieber 128 einteilig aus Metall, vorzugsweise aus Aluminium bzw. einer Aluminiumlegierung. Zwecks Verbesserung der Verschleißfestigkeit und der Lebensdauer ist die Steigungsfläche 129 und ggf. auch die Seitenführungsfläche 49a gehärtet oder mit einer verschleißfesteren Schicht beschichtet.

An dem dem Antriebsteil 128 abgewandten inneren Ende weist der Bolzenschaft 117 eine Abflachung mit einer achsparallelen Fläche 153 und einer vorzugsweise keilförmigen Nut 154 auf. Am anderen, das Antriebsteil 128 aufweisenden Ende des Kopfteils 135 befindet sich eine Ausnehmung in Form einer Sackbohrung 155, durch die das Gewicht des Führungsteils 54 verringert wird, und die dann, wenn sie so groß bemessen ist, daß mit einem Finger darin eingefaßt werden kann, die Griffestigkeit des Führungsteils 54 verbessert wird und das Führungsteils 54 leichter in die zugehörige Lagerbohrung des Lagergehäuses 139 manuell eingesetzt und herausgezogen werden kann.

Die Rastscheibe 145 weist an ihren Umfang eine im wesentlichen kreisrunde Mantelfläche 156 auf und in ihrem Zentrum ein der Form und Größe des abgeflachten Schaftendes 157 angepaßtes Steckloch 158 auf, mit dem es auf das Schaftende 157 aufsteckbar und durch eine nicht dargestellte angespitzte Madenschraube sicherbar ist. die in ein radiales Gewindeloch 159 in der Rastscheibe 145 einschraubbar ist, das im Bereich der Abflachung des Steckloches 158 angeordnet ist. In der eingeschraubten Stellung faßt die Madenschraube mit ihrer Spitze in die durch die Nut 154 gebildete Sicherungsausnehmung ein. Die Rastausnehmungen 145a sind in der Mantelfläche 156 auf deren Umfang verteilt angeordnet und bei der vorliegenden Ausgestaltung durch achsparallele keilförmige Kerben gebildet, deren Flanken einen etwa rechten oder stumpfen Winkel einschließen. Die Rastausnehmungen können jeweils einzeln oder von Gruppe zu Gruppe in gleichen oder unterschiedlichen Umfangsabständen a1, a2, b1 bis b4 und c1 bis c3 von einer bestimmten Ausgangsposition, insbesondere einer Ausgangs-Rastausnehmung 145b, angeordnet sein. Die Rastkerben sind durch die Steigung der Kurve der Kurvenscheibe 128 bzw. der Führungskante 128a vorgegeben und ermöglichen zu beiden Seiten die Bestimmung gleicher Protrusionsbewegungslängen durch überdrückbare Druckpunkte an den Verrastungspunkten.

Das Rastfederteil 146 besteht aus einem C-förmigen Bogenteil 146b, das im Bereich seiner Enden zum einen mit einem seitlich angeordneten Segmentteil 146c in Form einer seitlichen Platte und zum anderen mit einem sich radial oder sekantial erstreckenden Federteil 146d verbunden ist. Letzteres ist - axial gesehen - wellenförmig geformt mit einem mittleren gerundeten Vorsprung, der die Rastnase 146a bildet und durch beidseitig von ihm angeordnete konkave Bogenabschnitte 146e mit den Endbereichen des Bogenteils 146b verbunden. Am Außenrand des Segmentteils 146c befindet sich mittig ein Anzeigeelement 161, hier in Form eines keilförmigen Vorsprungs und in beiden Bereichen jeweils ein Vorsprung 162, die Anschläge zur Schwenkbegrenzung des Gelenkgehäuses 139 bilden. An den Enden des Bogenteils 146b können sich divergent erstreckende Endstücke 146f angeordnet sein. Das Rastfederteil 146 besteht aus einem elastischen Kunststoff und ist einteilig als Kunststoffspritzteil oder- preßteil hergestellt. Zwischen dem Segmentteil 146c und dem Federteil 146d befindet sich eine Ausnehmung 146g.

Wie am besten aus Fig. 28 zu entnehmen ist, ist das Rastfederteil 146 mit seinem Bogenteil 146b in die Schlitzausnehmung 120 eingesetzt, deren Größe und Form das Bogenteil 146b mit seiner Außenkontur entspricht. In der eingesetzten Position befindet sich das Federteil 146d hinter der Rastscheibe 145, wobei die Anordnung so getroffen ist, daß in der eingebauten Position das Federteil 146d geringfügig eingebogen ist und die Rastnase 146a mit einer gewissen Vorspannung gegen die Mantelfläche 156 der Rasrschcibe 145 drückt. Diese Federspannung ist nur so groß bemessen, daß das DrehAntriebsglied bzw. die -Antriebsscheibe oder die Rastscheibe 145 durch einen tagentialen Fingerdruck verdreht und dabei die Rastung überdrückt werden kann. In der eingebauten Position befindet sich das dünne Segmentteil 146c an der Innenseite der Rastscheibe 145, wo Kennzeichen oder Zahlen für die Raststellen angeordnet sind, die in Verbindung mit dem Anzeigeelement 161 eine Anzeige der jeweiligen Raststellung vorgeben. Zur Montage werden erst das Rastfederteil 146 und dann die Rastscheibe 145 in der richtigen Position in die Schlitzausnehmung 120 eingesteckt und dann wird das Führungsteil 54 mit dem Bolzenschaft 117 in die zugehörige Lagerbohrung und in das Steckloch 158 eingesteckt und mit der nicht dargestellten Madenschraube in der Rastscheibe 145 gesichert.

Aufgrund des sich über einen Winkel 163 von etwas mehr als 180° erstreckenden C-förmigen Bogenabschnitts des Grundes der Schlitzausnehmung 120 und sich daran anschließenden Seitenflächen 164, an denen die Endstücke 146f anliegen, ist das Rastfederteil 146 formschlüssig in der Schlitzausnehmung 120 gehalten.

Mit Ausnahme der Drehstellung des Führungsschiebers 128, in der sich der Gelenkkopfschaft 36b in der Ausnehmung 133 befindet, ist die jeweilige Protrusions-Führung 125a oder Distraktions-Führung 125b durch den Eingriff der Führungskanten 128a in die Führungsnuten 127 gegeben. Zur Ausführung einer nach vorne gerichteten Protrusionsbewegung des Unterkiefers werden die Scheiben 128 durch einen tangential wirksamen Fingerdruck im Bereich ihrer aus dem Gelenkgehäuse 39 herausragenden Umfangsabschnitte nach hinten gedreht, wodurch aufgrund der vorhandenen Steigung der Steigungsflächen 129 das Oberteil 37a nach hinten verschoben wird. Eine nach hinten gerichtete Protrusionsbewegung erfolgt durch umgekehrtes Drehen der Führungsschieber 128, wobei das bzw. die Federteile der sogenannten Zentrikschlösser die Rückführung der Bewegung herbeiführen oder unterstützen können, wie es beim vorbeschriebenen Ausführungsbeispiel bereits beschrieben worden ist.

In entsprechender Weise können in der Distraktions-Schwenkstellung (Fig. 20) der Gelenkgehäuse 39 Distraktionsbewegungen und -einstellungen sowohl im positiven als auch negativem Distraktionsbewegungsbereich (unterhalb oder oberhalb der O-Stellung im Schwenk-Schiebegelenk 11) vorgenommen werden.

Mit der erfindungsgemäßen Distraktionsvorrichtung lassen sich Aufbißschienen aus Kunststoff herstellen. Diese Schienen zwingen nach dem Zubeißen die Kiefergelenke 11 in eine therapeutische Position. Diese Position läßt sich zuvor im Artikulator 1 vorgeben und fixieren. Mit dieser Einstellung wird dann die Schiene vorzugsweise im Artikulator 1 hergestellt.

Eine weitere Anwendungsmöglichkeit ist das definierte Einschleifen einer Totalprothese, deren beide Prothesen-Teile gegeneinander verschoben werden können. Bei diesem Verschieben werden alle Regionen, die zu hoch sind, sichtbar und können somit abgeschliffen werden.

Durch diese Maßnahme wird erreicht, daß sich nach Möglichkeit immer alle Zähne berühren. Ein Lösen der durch Adhäsion haftenden Prothese wird dadurch vermieden.

Der Antrieb einer Protrusions- oder Distraktionsbewegung erfolgt in Stufen. An der Außenseite wird dabei der Vortrieb in Bewegung gesetzt. Der Vortrieb läuft dabei in einer Nut, damit eine geradlinige Führung entsteht.

Für eine Distraktionsbewegung werden die Gelenkgehäuse vertikal verschwenkt. In dieser Einstellung wird durch den Vortrieb das Gelenk definitiv auseinander gezogen. Der eingestellte Wert zeigt somit an, wie weit die Zahnkontakte von einander entfernt sind. Die mit dieser Einstellung hergestellte Schiene sorgt beim Patienten dafür, daß das Kiefergelenk definitiv auseinandergezogen wird. Dieser gewünschte Effekt entlastet das Kiefergelenk.

## Patentansprüche

1. Zahnärztlicher Artikulator (1) mit
- sich in seiner Arbeitsstellung übereinander nach vorne erstreckenden Artikulatorarmen (2, 3), von denen einer, insbesondere der obere Artikulatorarm (3), um eine sich rechtwinklig zur vertikalen Längsmittelebene (E1) erstreckende Schwenkachse (5) schwenkbar in zwei Schwenkgelenken (11) gelagert ist, die zu beiden Seiten der vertikalen Längsmittelebene (E1) des Artikulators (1) spiegelbildlich angeordnet sind,
- wobei die Schwenkgelenke (11) jeweils durch eine Gelenkausnehmung (40) in einem Gelenkgehäuse (39) und einen Gelenkzapfen (36) gebildet sind, der mit einem Kugelkopf (36a) durch eine Öffnung der Gelenkausnehmung (40) in diese einfaßt,
- und wobei an den einander zugewandten Seiten der Artikulatorarme (2, 3) Anordnungsplätze (13) für ein Unterkiefer-Zahnmodell bzw. Oberkiefer-Zahnmodell, (UK, OK) vorgesehen sind, wobei ein Unterkiefer-Zahnmodell (UK) und ein Oberkiefer-Zahnmodell (OK) durch Zentriervorrichtungen (137) an dem jeweils zugehörigen Artikulatorarm (2, 3) lösbar befestigt werden können,
- wobei dem schwenkbar gelagerten Artikulatorarm (3) auf beiden Seiten der Längs-mittelebene (E1) jeweils eine Distraktions-Einstellvorrichtung (126b) zum Ausführen von im wesentlichen rechtwinklig zur Okklusionsebene (45) gerichteten, voneinander unabhängigen Distraktionsbewegungen und zur Positionierung der jeweils eingestellten Distraktionsstellung oder gegen eine Rückführung aus der eingestellten Distraktionsstellung zugeordnet ist,
**dadurch gekennzeichnet,**
**daß** dem schwenkbar gelagerten Artikulatorarm (3) auf beiden Seiten der Längsmittelebene (E1) jeweils eine Distraktions-Führung (125b) zum Ausführen der Distraktionsbewegungen zugeordnet ist,
- und **daß** die Distraktions-Führung (125b) und die zugehörige Distraktions-Ein-stellvorrichtung (126b) in das zugehörige Schwenkgelenk (11) integriert sind.

2. Artikulator nach Anspruch 1,
**dadurch gekennzeichnet,**
**daß** ihm eine Protrusions-Führung (125a) und/oder eine Protrusions-Einstellvorrichtung (126a), vorzugsweise im Bereich des oder der Schwenkgelenke (11), zugeordnet ist.

3. Artikulator nach Anspruch 1 oder 2,
**dadurch gekennzeichnet,**
**daß** die Protrusions-Führung (125a) jeweils zwei von hinten nach vorne verlaufende und einander seitlich und aufrecht gegenüberliegende Führungsflächen (46, 47) aufweist und die Distraktions-Führung (125b) jeweils zwei aufrecht verlaufende und einander seitlich und sich in der Längsrichtung der vertikalen Längsmittelebene einander gegenüberliegende Führungsflächen (46, 47) aufweist.

4. Artikulator nach einem der Ansprüche 1 bis 3,
**dadurch gekennzeichnet,**
**daß** jede Gelenkausnehmung (40) aufweist eine sagittale Führungsfläche (46), die eine Bewegung des Gelenkes (11) nach oben begrenzt, eine Bennett-Führungsfläche (47), die eine Bewegung des Gelenkes nach innen begrenzt und eine Seitenführungsfläche (49), die eine Bewegung des Gelenkes nach hinten begrenzt.

5. Artikulator nach einem der vorherigen Ansprüche,
**dadurch gekennzeichnet,**
**daß** die Gelenkgehäuse (39) um etwa 90° um die Schwenkachse (5) schwenkbar und in der jeweiligen Schwenkstellung feststellbar am zugehörigen, insbesondere oberen, Artikulatorarm (3) gelagert sind und somit die Distraktions-Führung (125b) die Protrusions-Führung (125a) bildet oder umgekehrt und die Distraktions-Einstellvorrichtung (126b) die Protrusions-Einstellvorrichtung (125b) bildet oder umgekehrt.

6. Artikulator nach einem der vorherigen Ansprüche,
**dadurch gekennzeichnet,**
**daß** das am unteren Artikulatorarm (3) angeordnete Führungsteil der Führung (125a, 125b) durch eine Führungsnut (127) gebildet ist.

7. Artikulator nach Anspruch 6,
**dadurch gekennzeichnet,**
**daß** die Führungsnut (127) durch eine Umfangsnut am Schaft (26b) des zugehörigen Gelenkzapfens (36) gebildet ist.

8. Artikulator nach einem der vorherigen Ansprüche,
**dadurch gekennzeichnet,**
**daß** das am schwenkbaren Artikulatorarm (3) angeordnete Führungsteil jeweils am zugehörigen Gelenkgehäuse (39) angeordnet ist, vorzugsweise an dessen Außenseite.

9. Artikulator nach einem der vorherigen Ansprüche,
**dadurch gekennzeichnet,**
**daß** das am schwenkbaren Artikulatorarm (3) angeordnete Führungsteil durch einen leisten- oder scheibenförmigen Führungsschieber gebildet ist.

10. Artikulator nach Anspruch 9,
**dadurch gekennzeichnet,**
**daß** der Führungsschieber ein Getriebeantriebsteil für die Protrusions- oder Distraktionsbewegung ist.

11. Artikulator nach Anspruch 9 oder 10,
**dadurch gekennzeichnet,**
**daß** der Führungsschieber ein Drehteil ist, das bezüglich seiner Drehachse im Sinne einer Steigung exzentrisch oder kurvenförmig ausgebildet ist.

12. Artikulator nach Anspruch 11,
**dadurch gekennzeichnet,**
**daß** das Drehteil hinter oder über dem zugehörigen Gelenkzapfen (36) angeordnet ist und vorzugsweise in einem Schlitz des Artikulatorarms (3) teilweise versenkt ist.

13. Artikulator nach Anspruch 10 bis 12,
**dadurch gekennzeichnet,**
**daß** der Führungsschieber einen Bolzenschaft (117) aufweist, mit dem er in einer Lagerbohrung drehbar gelagert ist, die parallel zur Schwenkachse (5) im zugehörigen Gelenkgehäuse (39) angeordnet ist, und daß das Getriebeantriebsteil im axialen Abstand auf dem Bolzenschaft (117) angeordnet ist.

14. Artikulator nach einem der Ansprüche 10 bis 13,
**dadurch gekennzeichnet,**
**daß** das Getriebeantriebsteil oder der Bolzenschaft (117) ein Seitenführungsteil (54) bildet oder jedem Schwenk-Schiebegelenk (11) ein Seitenführungsteil (54) mit einem Bolzenschaft (117) zugeordnet ist, der in einer Lagerbohrung des zugehörigen Gelenkgehäuses (39) drehbar gelagert ist, die sich achsparallel zur Schwenkachse (5) erstreckt und daß der Führungsschieber (128) gegen das Seitenführungsteil austauschbar ist.

15. Artikulator nach einem der vorherigen Ansprüche,
**dadurch gekennzeichnet,**
**daß** die beweglichen Gelenkteile (39) der Schwenk-Schiebegelenke (11) jeweils durch eine federelastische Rückstellkraft in ihre Basisstellung, die Schlußbißstellung, vorgespannt sind.

16. Artikulator nach einem der Ansprüche 11 bis 15,
**dadurch gekennzeichnet,**
**daß** der Führungsschieber mit einem hakenförmigen Führungsteil (131) versehen ist, das das andere Führungsteil übergreift.

17. Artikulator nach Anspruch 16,
**dadurch gekennzeichnet,**
**daß** das hakenförmige Führungsteil (131) eine im Sinne einer Steigung angeordnete Führungsnut (129) aufweist, die das andere Führungsteil (36b) aufnimmt.

18. Artikulator nach einem der Ansprüche 11 bis 17,
**dadurch gekennzeichnet,**
**daß** am Umfang des Drehteils oder einem Anbauteil (145) eine Skala angeordnet ist.

19. Artikulator nach einem der Ansprüche 11 bis 18,
**dadurch gekennzeichnet,**
**daß** das Drehteil in seiner exzentrischen Steigungsfläche eine Ausnehmung (133) aufweist, aus der in der Schlußbißstellung der Gelenkzapfen (36) seitlich auszutreten vermag.

## Claims

1. Dental articulator (1) having
- articulator arms (2, 3) extending forwardly above one another in the working disposition of the articulator, of which one arm, in particular the upper articulator arm (3), is mounted in two pivot joints (11) pivotably about a pivot axis (5) extending at right angles to the vertical longitudinal middle plane (E1), which two pivot joints are arranged to the two sides of the vertical longitudinal middle plane (E1) of the articulator (1) in a mirror image manner,
- wherein the pivot joints (11) are in each case formed by means of a joint recess (40) in a joint housing (39) and a joint pin (36) which engages with a ball head (36a) into the joint recess through an opening of the joint recess (40),
- and wherein on the sides of the articulator arms (2, 3) towards one another there are provided stations (13) for arrangement of a lower jaw tooth model or upper jaw tooth model (UK, OK), wherein a lower jaw tooth model (UK) and an upper jaw tooth model (OK) can be releasably attached to the respective associated articulator arm (2, 3) by means of centering devices (137),
- wherein respective distraction setting devices (126b) for carrying out mutually independent distraction movements, directed in substance at right angles to the occlusal plane (45), and for positioning of the respectively set distraction disposition or against a return movement from the said distraction position, are associated in each case with the pivotally mounted articulator arm (3) on both sides of the longitudinal middle plane (E1),
**characterized in that**,
respective distraction guides (125b), for carrying out the distraction movements, are associated with the pivotally mounted articulator arm (3) on both sides of the longitudinal middle plane (E1),
- and **in that** the distraction guide (125b) and the associated distraction setting device (126b) are integrated in the associated pivot joint (11).

2. Articulator according to claim 1,
**characterized in that**,
there is associated therewith a protrusion guide (125a) and/or a protrusion setting device (126a), preferably in the region of the pivot joint or joints (11).

3. Articulator according to claim 1 or 2,
**characterized in that**,
the protrusion guide (125a) has in each case two guide surfaces (46, 47) running from the rear forwardly and lying opposite one another laterally and upright and the distraction guide (125b) has in each case two guide surfaces (46, 47) extending upright and lying opposite one another laterally and in the longitudinal direction of the vertical longitudinal middle plane.

4. Articulator according to any of claims 1 to 3,
**characterized in that**,
each joint recess (40) has a sagittal guide surface (46), which bounds the movement of the joint (11) upwardly, a Bennett guide surface (47), which bounds the movement of the joint inwardly, and side guide surface (49), which bounds the movement of the joint rearwardly.

5. Articulator according to any preceding claim,
**characterized in that**,
the joint housings (39) are mounted to be pivotable by about 90° around the pivot axis (5) and to be fixable in the respective pivot disposition, on the associated, in the particular upper, articulator arm (3) and thus the distraction guide (125b) forms the protrusion guide (125a) or vice versa and the distraction setting device (126b) forms the protrusion setting device (125b) or vice versa.

6. Articulator according to any preceding claim,
**characterized in that**,
the guide part of the guide (125a, 125b) arranged on the lower articulator arm (3) is formed by means of a guide groove (127).

7. Articulator according to claim 6,
**characterized in that**,
the guide groove (127) is formed by means of circumferential groove on the shaft (26b) of the associated joint pin (36).

8. Articulator according to any preceding claim,
**characterized in that**,
the guide part arranged on the pivotable articulator arm (3) is in each case arranged on the associated joint housing (39), preferably on the its outside.

9. Articulator according to any preceding claim,
**characterized in that**,
the guide part arranged on the pivotable articulator arm (3) is formed by means of strip-like or plate-like guide slider.

10. Articulator according to claim 9,
**characterized in that**,
the guide slider is a transmission drive part for the protrusion or distraction movement.

11. Articulator according to claim 9 or 10,
**characterized in that**,
the guide slider is a rotary part which with reference to its axis of rotation is formed in the sense of an incline eccentrically or in a curve shape.

12. Articulator according to claim 11,
**characterized in that**,
the rotary part is arranged behind or above the associated joint pin (36) and is preferably partly recessed into a slot of the articulator arm (3).

13. Articulator according to claim 10 to 12,
**characterized in that**,
the guide slider has a bolt shaft (117) with which it is rotatably mounted in a bearing bore which is arranged parallel to the pivot axis (5) in the associated joint housing (39), and **in that** the transmission drive part is arranged at an axial spacing on the bolt shaft (117).

14. Articulator according to any of claims 10 to 13,
**characterized in that**,
the transmission drive part or the bolt shaft (117) forms a side guide part (54) or there is associated with each pivot-slide joint (11) a side guide part (54) having a bolt shaft (117), which is rotatably mounted in a bearing bore of the associated joint housing (39), which extends axis parallel to the pivot axis (5) and **in that** the guide slider (127) can be exchanged for the side guide part.

15. Articulator according to any preceding claim,
**characterized in that**,
the moveable joint parts (39) of the pivot-slide joints (11) are in each case biased into their basic disposition, the closed bite disposition, by means of a spring elastic return force.

16. Articulator according to any of claims 11 to 15,
**characterized in that**,
the guide slider is provided with a hook-like guide part (131) over which the other guide part engages.

17. Articulator according to claim 16,
**characterized in that**,
the hook-like guide part (131) has a guide groove (129), arranged in the sense of an incline, which receives the other guide part (36b).

18. Articulator according to any of claims 11 to 17,
**characterized in that**,
a scale is arranged on the circumference of the rotary part or on an attached part (145).

19. Articulator according to any of claims 11 to 18,
**characterized in that**,
the rotary part has in its eccentric incline surface a recess (133) out of which the joint pin (36) is capable of laterally exiting in the closed bite disposition.

## Revendications

1. Articulateur (1) de dentiste comprenant
- des bras articulateurs (2, 3) s'étendant l'un au-dessus de l'autre vers l'avant dans sa position de travail, dont l'un, en particulier le bras articulateur (3) supérieur, est monté autour d'un axe de basculement (5) s'étendant à angle droit par rapport au plan médian longitudinal (E1) vertical de façon basculante dans deux articulations pivotantes (11), qui sont disposées de façon symétrique des deux côtés du plan médian longitudinal (E1) vertical de l'articulateur (1),
- les articulations pivotantes (11) étant formées chacune par un évidement d'articulation (40) dans un boîtier d'articulation (39) et par un pivot d'articulation (36), qui est intégré avec une tête sphérique (36a) à travers une ouverture de l'évidement d'articulation (40) dans celle-ci,
- et des emplacements d'agencement (13) étant prévus sur les côtés, tournés l'un vers l'autre, des bras articulateurs (2, 3) pour un modèle de dent de maxillaire inférieur ou un modèle de dent de maxillaire supérieur (UK, OK), un modèle de dent de maxillaire inférieur (UK) et un modèle de dent de maxillaire supérieur (OK) pouvant être fixés de façon amovible par des dispositifs de centrage (137) sur le bras articulateur (2, 3) respectif,
- chaque fois un dispositif de réglage de distraction (126b) étant associé au bras articulateur (3) monté de façon basculante sur les deux côtés du plan médian longitudinal (E1) pour l'exécution de mouvements de distraction sensiblement perpendiculairement au plan d'occlusion (45) et indépendants les uns des autres et pour le positionnement de la position de distraction respectivement réglée ou contre un retour à partir de la position de distraction réglée,
**caractérisé en ce que**
à chaque fois un guide de distraction (125b) est associé au bras articulateur (3) monté de façon basculante des deux côtés du plan médian longitudinal (E1), pour l'exécution des mouvements de distraction,
- et **en ce que** le guide de distraction (125b) et le dispositif de réglage de distraction (126b) correspondant sont intégrés dans l'articulation pivotante (11) concernée.

2. Articulateur selon la revendication 1,
**caractérisé en ce que**
un guide de protrusion (125a) et/ou un dispositif de réglage de protrusion (126a), de préférence dans la zone de la ou des articulations pivotantes (11), lui est (sont) associé(s).

3. Articulateur selon la revendication 1 ou 2,
**caractérisé en ce que**
le guide de protrusion (125a) présente respectivement deux surfaces de guidage (46, 47) disposées de l'arrière vers l'avant et respectivement opposées sur le côté et verticalement et le guide de distraction (125b) présente respectivement deux surfaces de guidage (46, 47) disposées verticalement et se faisant face dans le sens longitudinal du plan médian longitudinal vertical.

4. Articulateur selon l'une des revendications 1 à 3,
**caractérisé en ce que**
chaque évidement d'articulation (40) présente une surface de guidage (46) sagittale, qui limite un déplacement de l'articulation (11) vers le haut, une surface de guidage de Bennett (47), qui limite un déplacement de l'articulation vers l'intérieur et une surface de guidage latéral (49), qui limite un déplacement de l'articulation vers l'arrière.

5. Articulateur selon l'une des revendications précédentes,
**caractérisé en ce que**
les boîtiers d'articulation (39) sont montés sur le bras articulateur (3) correspondant, en particulier supérieur, de façon à pouvoir basculer d'environ 90° autour de l'axe de pivotement (5) et à être bloqués dans la position de basculement respective et de ce fait le guide de distraction (125b) forme le guide de protrusion (125a) ou inversement et le dispositif de réglage de distraction (1 26b) forme le dispositif de réglage de protrusion (125b) ou inversement.

6. Articulateur selon l'une des revendications précédentes,
**caractérisé en ce que**
la partie de guidage, disposée sur le bras articulateur (3) inférieur, du guide (125a, 125b), est formée par une rainure de guidage (127).

7. Articulateur selon la revendication 6,
**caractérisé en ce que**
la rainure de guidage (127) est formée par une rainure périphérique sur la tige (26b) du pivot d'articulation (36) correspondant.

8. Articulateur selon l'une des revendications précédentes,
**caractérisé en ce que**
la partie de guidage disposée sur le bras articulateur (3) basculant est disposée sur le boîtier d'articulation (39) correspondant, de préférence sur son côté extérieur.

9. Articulateur selon l'une des revendications précédentes,
**caractérisé en ce que**
la partie de guidage disposée sur le bras articulateur (3) basculant est formée par un coulisseau de guidage en forme de baguette ou de plaque.

10. Articulateur selon la revendication 9,
**caractérisé en ce que**
le coulisseau de guidage est une partie d'entraînement de transmission pour le mouvement de protrusion ou de distraction.

11. Articulateur selon la revendication 9 ou 10,
**caractérisé en ce que**
le coulisseau de guidage est une partie rotative qui est formée de façon excentrée ou en forme de came par rapport à son axe de rotation, dans le sens d'une rampe inclinée.

12. Articulateur selon la revendication 11,
**caractérisé en ce que**
la partie rotative est disposée derrière ou au-dessus du pivot d'articulation (36) correspondant et est partiellement encastrée de préférence dans une fente du bras articulateur (3).

13. Articulateur selon les revendications 10 à 12,
**caractérisé en ce que**
le coulisseau de guidage présente une tige de goujon (117) par laquelle il est monté de façon pivotante dans un alésage de palier, qui est disposé parallèlement à l'axe de pivotement (5) dans le boîtier d'articulation (39) correspondant, et **en ce que** la partie d'entraînement de transmission est disposée à distance axiale sur la tige de goujon (117).

14. Articulateur selon l'une des revendications 10 à 13,
**caractérisé en ce que**
la partie d'entraînement de transmission ou la tige de goujon (117) forme une partie de guidage latéral (54) ou à chaque articulation coulissante de pivotement (11) est associée une partie de guidage latéral (54) avec une tige de goujon (117), qui est montée de façon pivotante dans un alésage de palier du boîtier d'articulation (39) correspondant, qui s'étend sur un axe parallèlement à l'axe de pivotement (5) et **en ce que** le coulisseau de guidage (128) peut être remplacé par la partie de guidage latéral.

15. Articulateur selon l'une des revendications précédentes,
**caractérisé en ce que**
les parties d'articulation (39) mobiles des articulations coulissantes de pivotement (11) sont précontraintes chacune par une force de rappel élastique de type ressort dans leur position de base, la position de morsure de fermeture.

16. Articulateur selon l'une des revendications 11 à 15,
**caractérisé en ce que**
le coulisseau de guidage est pourvu d'une partie de guidage (131) en forme de crochet, qui recouvre l'autre partie de guidage.

17. Articulateur selon la revendication 16,
**caractérisé en ce que**
la partie de guidage (131) en forme de crochet présente une rainure de guidage (129) disposée dans le sens d'une rampe inclinée, qui reçoit l'autre partie de guidage (36b).

18. Articulateur selon l'une des revendications 11 à 17,
**caractérisé en ce que**
une échelle graduée est disposée sur le pourtour de la partie rotative ou sur une partie rapportée (145).

19. Articulateur selon l'une quelconque des revendications 11 à 18,
**caractérisé en ce que**
la partie rotative présente dans sa surface de rampe inclinée excentrée un évidement (133) duquel le pivot d'articulation (36) est susceptible de sortir latéralement dans la position de morsure de fermeture.
